# EUROPEAN PATENT APPLICATION

(11) **EP 4 838 933 A1**
(43) Date of publication of application: **11.11.2026**
(21) Application number: 25744423.2
(22) Date of filing: 03.01.2025
(51) Int. Cl.: H04W 24/02

(54) **COMMUNICATION METHOD AND RELATED APPARATUS**

(30) Priority: 24.01.2024 CN 202410102875
(71) Applicant: Huawei Technologies Co., Ltd., Shenzhen, Guangdong 518129 (CN)
(72) Inventor: LIANG, Yujun, Chengdu, Sichuan 611756 (CN); FANG, Xuming, Chengdu, Sichuan 611756 (CN); HE, Rong, Chengdu, Sichuan 611756 (CN); DU, Rui, Shenzhen, Guangdong 518129 (CN)
(74) Representative: Huawei European IPR
(86) International application number: PCT/CN2025/070590
(87) International publication number: WO 2025/156977

(57) **Abstract**

This application provides a communication method and a communication apparatus, and is applied to the field of communication technologies. In the technical solutions provided in this application, a first communication device receives first information from a second communication device, where the first information is used to request the first communication device to perform collaborative sharing sensing; and sends second information to the second communication device, where the second information indicates agreement to the collaborative sharing sensing, rejection of the collaborative sharing sensing, or rejection of the collaborative sharing sensing with a recommended sensing parameter. In the method, the second communication device requests the collaborative sharing sensing to set up the collaborative sharing sensing with the first communication device, to obtain a sensing measurement result between the first communication device and another communication device, so that establishment of a redundant sensing measurement session can be reduced, thereby reducing network resources.

## Description

This application claims priority to Chinese Patent Application No. 202410102875.6, filed with the China National Intellectual Property Administration on January 24, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A wireless local area network sensing (WLAN sensing) technology is a technology that uses WLAN devices everywhere to sense an object, and performs specific processing on channel state information (channel state information, CSI), to identify an activity status, an action type, or a location change of a person in an environment, or sense a surrounding environment and detect an obstacle.

Currently, a standardized WLAN sensing procedure specified in the IEEE 802.11bf standard is as follows: A sensing initiator (sensing initiator) initiates WLAN sensing to a sensing responder (sensing responder), and the two sensing parties exchange a sensing capability, negotiate a sensing measurement parameter, and establish a sensing measurement session; then, a sensing transmitter (sensing transmitter) sends a null data packet (null data packet, NDP) to a sensing receiver (sensing receiver) for sensing measurement; and after sensing measurement is completed, the sensing measurement session is terminated.

However, this technology has the following problem: When wireless sensing is performed between devices, network resources are wasted.

### SUMMARY

This application provides a communication method and a related apparatus, to resolve a prior-art problem of a waste of network resources caused when wireless sensing is performed between different devices.

According to a first aspect, this application provides a communication method and a related apparatus. The method is applied to a first communication device. The method includes: receiving first information from a second communication device, where the first information is used to request the first communication device to perform collaborative sharing sensing; and sending second information to the second communication device, where the second information indicates agreement to the collaborative sharing sensing, rejection of the collaborative sharing sensing, or rejection of the collaborative sharing sensing with a recommended sensing parameter.

In the method, the second communication device requests the collaborative sharing sensing to set up the collaborative sharing sensing with the first communication device, to obtain a sensing measurement result between the first communication device and another communication device, so that establishment of a redundant sensing measurement session can be reduced, thereby reducing network resources.

In some possible implementations, receiving the first information from the second communication device includes: receiving a first frame from the second communication device, where the first frame includes an SBP parameters element field, the SBP parameters element field includes an SBP parameters control field, and the SBP parameters control field carries the first information.

In some other possible implementations, receiving the first information from the second communication device includes: receiving a first frame from the second communication device, where the first frame includes a sensing measurement parameters element field, the sensing measurement parameters element field includes a sensing subelements field, and the sensing subelements field carries the first information.

In the method, request information for the collaborative sharing sensing may be obtained by designing a first frame structure.

In some possible implementations, sending the second information to the second communication device includes: sending a sixth frame to the second communication device, where the sixth frame includes a status code field, and the status code field carries the second information.

In the method, the first communication device may indicate, to the second communication device by using the status code field in the second information, agreement to the collaborative sharing sensing, rejection of the collaborative sharing sensing, or rejection of the collaborative sharing sensing with a recommended sensing parameter.

In some possible implementations, the method further includes: sending third information to a third communication device, where the third information is used to request sharing permission for a sensing measurement result; and receiving fourth information from the third communication device, where the fourth information indicates whether to agree to share the sensing measurement result.

In the method, the first communication device requests the third communication device whether to agree to the permission to share the sensing measurement result, and then indicates, to the second communication device, whether to share the sensing measurement result, thereby avoiding a problem of unauthorized disclosure of privacy.

In some possible implementations, sending the third information to the third communication device includes: sending a second frame to the third communication device, where the second frame includes a sensing measurement parameters element field, the sensing measurement parameters element field includes a sensing subelements field, and the sensing subelements field carries the third information.

In the method, indication information for the permission to share the sensing measurement result may be obtained by designing a second frame structure.

In some possible implementations, receiving the fourth information from the third communication device includes: receiving a seventh frame from the third communication device, where the seventh frame includes a status code field, and the status code field carries the fourth information.

In the method, the third communication device may indicate, to the first communication device by using the status code field in the fourth information, agreement to share the sensing measurement result or rejection of sharing the sensing measurement result.

In some possible implementations, the fourth information indicates agreement to share the sensing measurement result, and the method further includes: sending fifth information to the second communication device, where the fifth information indicates that the third communication device agrees to share the sensing measurement result.

In some possible implementations, sending the fifth information to the second communication device includes: sending a third frame to the second communication device, where the third frame includes a first field and a second field, the first field carries the fifth information, the second field carries sixth information, and the sixth information indicates that the third frame carries indication information indicating that a communication device agrees to share the sensing measurement result.

In some possible implementations, the second field may be a public action field.

In some possible implementations, the third frame further includes a third field, the third field carries seventh information, and the seventh information indicates a quantity of communication devices that agree to share the sensing measurement result.

In some possible implementations, the method further includes: sending eighth information to the third communication device, where the eighth information indicates to end the sharing permission for the sensing measurement result.

In some possible implementations, sending the eighth information to the third communication device includes: sending a fourth frame to the third communication device, where the fourth frame includes a measurement session termination control field, and the measurement session termination control field carries the eighth information.

In some possible implementations, the method further includes: receiving ninth information sent by the third communication device, where the ninth information indicates to end the sharing permission for the sensing measurement result.

In some possible implementations, receiving the ninth information sent by the third communication device includes: receiving a fifth frame sent by the third communication device, where the fifth frame includes a measurement session termination control field, and the measurement session termination control field carries the ninth information.

In this implementation, for example, the method further includes: sending tenth information to a fourth communication device, where the tenth information is used to request sharing permission for a sensing measurement result; and receiving eleventh information from the fourth communication device, where the eleventh information indicates whether to agree to share the sensing measurement result.

In some possible implementations, sending the tenth information to the fourth communication device includes: sending an eighth frame to the fourth communication device, where the eighth frame includes a sensing measurement parameters element field, the sensing measurement parameters element field includes a sensing subelements field, and the sensing subelements field carries the tenth information.

In some possible implementations, receiving the eleventh information from the fourth communication device includes: receiving a ninth frame from the fourth communication device, where the ninth frame includes a status code field, and the status code field carries the eleventh information.

According to a second aspect, this application provides a communication method, and the method is applied to a second network device. The method includes: sending first information, where the first information is used to request a first communication device to perform collaborative sharing sensing; and receiving second information from the first communication device, where the second information indicates agreement to the collaborative sharing sensing, rejection of the collaborative sharing sensing, or rejection of the collaborative sharing sensing with a recommended sensing parameter.

In the method, the second communication device requests the collaborative sharing sensing to set up the collaborative sharing sensing with the first communication device, to obtain a sensing measurement result between the first communication device and another communication device, so that establishment of a redundant sensing measurement session can be reduced, thereby reducing network resources.

In some possible implementations, sending the first information includes: sending a first frame, where the first frame includes an SBP parameters element field, the SBP parameters element field includes an SBP parameters control field, and the SBP parameters control field carries the first information.

In some other possible implementations, sending the first information includes: sending a first frame, where the first frame includes a sensing measurement parameters element field, the sensing measurement parameters element field includes a sensing subelements field, and the sensing subelements field carries the first information.

In the method, request information for the collaborative sharing sensing may be obtained by designing a first frame structure.

In some possible implementations, receiving the second information from the first communication device includes: receiving a sixth frame from the first communication device, where the sixth frame includes a status code field, and the status code field carries the second information.

In the method, the first communication device may indicate, to the second communication device by using the status code field in the second information, agreement to the collaborative sharing sensing, rejection of the collaborative sharing sensing, or rejection of the collaborative sharing sensing with a recommended sensing parameter.

In some possible implementations, the method further includes: receiving fifth information from the first communication device, where the fifth information indicates information about a third communication device that agrees to share a sensing measurement result.

In some possible implementations, receiving the fifth information from the first communication device includes: receiving a third frame from the first communication device, where the third frame includes a first field and a second field, the first field carries the fifth information, the second field carries sixth information, and the sixth information indicates that the third frame carries indication information indicating that a communication device agrees to share the sensing measurement result.

In some possible implementations, the second field is a public action field.

In some possible implementations, the third frame further includes a third field, the third field carries seventh information, and the seventh information indicates a quantity of communication devices that agree to share the sensing measurement result.

According to a third aspect, this application provides a communication method, and the method is applied to a third communication device. The method includes: receiving third information from a first communication device, where the third information is used to request sharing permission for a sensing measurement result; and sending fourth information, where the fourth information indicates whether to agree to share the sensing measurement result.

In some possible implementations, receiving the third information from the first communication device includes: receiving a second frame from the first communication device, where the second frame includes a sensing measurement parameters element field, the sensing measurement parameters element field includes a sensing subelements field, and the sensing subelements field carries the third information.

In the method, indication information for the permission to share the sensing measurement result may be obtained by designing a second frame structure.

In some possible implementations, sending the fourth information includes: sending a seventh frame, where the seventh frame includes a status code field, and the status code field carries the fourth information.

In the method, the third communication device may indicate, to the first communication device by using the status code field in the fourth information, agreement to share the sensing measurement result or rejection of sharing the sensing measurement result.

In some possible implementations, the method further includes: receiving eighth information from the first communication device, where the eighth information indicates to end the sharing permission for the sensing measurement result.

In some possible implementations, receiving the eighth information from the first communication device includes: receiving a fourth frame from the first communication device, where the fourth frame includes a measurement session termination control field, and the measurement session termination control field carries the eighth information.

In some possible implementations, the method further includes: sending ninth information, where the ninth information indicates to end the sharing permission for the sensing measurement result.

In some possible implementations, sending the ninth information includes: sending a fifth frame, where the fifth frame includes a measurement session termination control field, and the measurement session termination control field carries the ninth information.

According to a fourth aspect, this application provides a communication apparatus. The communication apparatus may include modules that perform, in a one-to-one correspondence manner, the methods/operations/steps/actions in the method described in the first aspect. The module may be implemented through a hardware circuit, software, or a combination of a hardware circuit and software.

In a design, the apparatus may include a processing module and a communication module. The communication module is configured to perform a sending action and a receiving action that are performed by the communication device in the method described in the first aspect, and the processing module is configured to perform a processing-related action performed by the communication device in the method described in the first aspect.

In a design, the apparatus may be a communication device; may be an apparatus, a module, a circuit, a chip, or the like that is configured and disposed in the communication device; or may be an apparatus that can be used in a matching manner with the communication device.

For example, the communication device may be an AP.

According to a fifth aspect, this application provides a communication apparatus. The communication apparatus may include modules that perform, in a one-to-one correspondence manner, the methods/operations/steps/actions in the method described in the second aspect. The module may be implemented through a hardware circuit, software, or a combination of a hardware circuit and software.

In a design, the apparatus may include a processing module and a communication module. The communication module is configured to perform a sending action and a receiving action that are performed by the communication device in the method described in the second aspect, and the processing module is configured to perform a processing-related action performed by the communication device in the method described in the second aspect.

In a design, the apparatus may be a communication device; may be an apparatus, a module, a circuit, a chip, or the like that is configured and disposed in the communication device; or may be an apparatus that can be used in a matching manner with the communication device.

For example, the communication device may be an AP, or may be a STA.

According to a sixth aspect, this application provides a communication apparatus. The communication apparatus may include modules that perform, in a one-to-one correspondence manner, the methods/operations/steps/actions in the method described in the third aspect. The module may be implemented through a hardware circuit, software, or a combination of a hardware circuit and software.

In a design, the apparatus may include a processing module and a communication module. The communication module is configured to perform a sending action and a receiving action that are performed by the communication device in the method described in the third aspect, and the processing module is configured to perform a processing-related action performed by the communication device in the method described in the third aspect.

In a design, the apparatus may be a communication device; may be an apparatus, a module, a circuit, a chip, or the like that is configured and disposed in the communication device; or may be an apparatus that can be used in a matching manner with the communication device.

For example, the communication device may be an AP, or may be a STA.

According to a seventh aspect, an apparatus is provided, including a processor. When instructions are run by the processor, the method according to any one of the first aspect or the possible implementations of the first aspect is implemented.

Optionally, the apparatus may further include a storage medium. The storage medium stores the instructions executed by the processor.

According to an eighth aspect, an apparatus is provided, including a processor. When instructions are run by the processor, the method according to any one of the second aspect or the possible implementations of the second aspect is implemented.

Optionally, the apparatus may further include a storage medium. The storage medium stores the instructions executed by the processor.

According to a ninth aspect, an apparatus is provided, including a processor. When instructions are run by the processor, the method according to any one of the third aspect or the possible implementations of the third aspect is implemented.

Optionally, the apparatus may further include a storage medium. The storage medium stores the instructions executed by the processor.

According to a tenth aspect, a chip is provided, including a processing circuit. The processing circuit is configured to run a program or instructions, so that the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

Optionally, the chip may further include a memory, and the memory is configured to store the program or the instructions.

Optionally, the chip may further include a transceiver circuit or an input/output interface.

According to an eleventh aspect, a computer-readable storage medium is provided. The computer-readable storage medium includes instructions. When the instructions are run by a processor, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

According to a twelfth aspect, a computer program product is provided. The computer program product includes computer program code or instructions. When the computer program code or the instructions are run, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

According to a thirteenth aspect, a communication system is provided. The communication system includes one or a combination of the following apparatuses: an apparatus performing any one of the first aspect or the possible implementations of the first aspect, an apparatus performing any one of the second aspect or the possible implementations of the second aspect, or an apparatus performing any one of the third aspect or the possible implementations of the third aspect.

### BRIEF DESCRIPTION OF DRAWINGS

FIG. 1 is a diagram of a communication system to which a method according to an embodiment of this application is applicable;
FIG. 2 is a diagram of an application scenario to which a method according to an embodiment of this application is applicable;
FIG. 3 is a diagram of another application scenario to which a method according to an embodiment of this application is applicable;
FIG. 4 is a schematic flowchart of a communication method according to an embodiment of this application;
FIG. 5 is a diagram of a CoS SBP request frame;
FIG. 6 is another diagram of a CoS SBP request frame;
FIG. 7 is a diagram of a CoS sensing measurement request frame;
FIG. 8 is another diagram of a CoS sensing measurement request frame;
FIG. 9 is a diagram of a CoS SBP response frame;
FIG. 10 is another diagram of a CoS SBP response frame;
FIG. 11 is a diagram of a CoS sensing measurement request frame;
FIG. 12 is another diagram of a CoS sensing measurement request frame;
FIG. 13 is a diagram of a CoS sensing measurement response frame;
FIG. 14 is a diagram of a CoS Renewing frame according to an embodiment of this application;
FIG. 15 is a schematic flowchart of a communication method according to an embodiment of this application;
FIG. 16 is a diagram of a CoS sensing measurement termination frame;
FIG. 17 is a schematic flowchart of a communication method according to another embodiment of this application;
FIG. 18 is a schematic flowchart of a communication method according to an embodiment of this application;
FIG. 19 is a schematic flowchart of a CoS SBP setup and sharing phase according to an embodiment of this application;
FIG. 20 is a schematic flowchart of a CoS SBP termination phase according to an embodiment of this application;
FIG. 21 is a schematic flowchart of a CoS SBP termination phase according to another embodiment of this application;
FIG. 22 is an enhanced flowchart of a CoS SBP termination phase according to an embodiment of this application;
FIG. 23 is a schematic flowchart of a setup phase and sharing of CoS Non-TB Sensing according to an embodiment of this application;
FIG. 24 is a diagram of a structure of a communication apparatus according to an embodiment of this application; and
FIG. 25 is a diagram of a structure of a communication apparatus according to another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

It should be noted that in embodiments of this application, the word such as "example" or "for example" is used to represent giving an example, an illustration, or a description. Any embodiment or design solution described as "example" or "for example" in this application should not be explained as being more preferred or having more advantages than another embodiment or design solution. To be precise, use of the word such as "example" or "for example" is intended to present a relative concept in a specific manner.

In embodiments of this application, "at least one" means one or more, and "a plurality of" means two or more. The term "and/or" describes an association relationship between associated objects, and indicates that three relationships may exist. For example, "A and/or B" may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, and (or) c may indicate a, b, c, a and b, a and c, b and c, or a, b, and c, where a, b, and c may be singular or plural.

For ease of understanding the communication method provided in embodiments of this application, the following describes some concepts in embodiments of this application. It may be understood that these concept descriptions do not constitute a limitation on the technical solutions provided in embodiments of this application.

In embodiments of this application, a wireless access point (access point, AP) may be a core device for establishing a wireless local area network, and is a central node of a network. A main function of the AP is to provide a wireless access service. The AP may be connected to a wireless network adapter and a wired network, so that wireless terminal devices such as a notebook computer and a smartphone are connected to a network in a wireless manner. The AP is usually installed at an edge of a network, for example, on a wall or a ceiling in an office, a home, or a public place. A main function of the AP is to provide a wireless coverage area. In the coverage area, a wireless terminal device may communicate with a network.

A station (station, STA) may also be referred to as a wireless workstation, and a main function of the station is to provide access for a wireless terminal device. The STA usually includes devices such as a wireless network adapter and a notebook computer. By connecting to an AP, the STA may obtain a network connection and communicate with another device. A STA device may be a mobile device, or may be a fixed device. For example, the STA device may be but is not limited to a device having a Wi-Fi function, such as a mobile phone, a tablet computer, a notebook computer, a sound box, a wearable device, a socket, a desk lamp, a smart screen, a television, a smart home appliance, an Internet of Things (Internet of things, IoT) device, or a camera device. Optionally, the STA device may alternatively be a personal digital assistant (personal digital assistant, PDA), a handheld device with a wireless communication function, a computing device, a virtual reality (virtual reality, VR) terminal device, an uncrewed aerial vehicle device, an augmented reality (augmented reality, AR) terminal device, a wireless terminal in industrial control (industrial control), a wireless terminal in a smart home (smart home), or the like. A form of the STA device is not specifically limited in embodiments of this application. It should be understood that the fixed device may be understood as a device whose location cannot be moved, or a device whose location is inconvenient to move. For example, a television may be understood as a fixed device.

A sensing initiator (Sensing initiator) is a device that initiates WLAN Sensing. A sensing responder (Sensing responder) is a device that responds to the WLAN Sensing initiated by the Sensing initiator. A sensing transmitter (Sensing transmitter) is a device that sends a null data packet (null data packet, NDP) for sensing measurement. A sensing receiver (Sensing receiver) is a device that receives the NDP sent by the Sensing transmitter and performs sensing measurement.

A sensing capabilities exchange (Sensing capabilities exchange) procedure completes an exchange of sensing capabilities between the two sensing parties. A sensing measurement session (Sensing measurement session) procedure is used by the Sensing initiator and the Sensing responder to negotiate a sensing measurement parameter, and establish a sensing measurement session. A sensing measurement exchange (Sensing measurement exchange) procedure is an actual measurement part of the WLAN Sensing in which the Sensing transmitter sends an NDP frame to the Sensing receiver for sensing measurement. A measurement unit in the procedure is a sensing measurement exchange. A sensing measurement session termination (Sensing measurement session termination) procedure is used to terminate a sensing measurement session.

The sensing measurement session (Sensing measurement session) procedure is started by a sensing measurement request frame (Sensing Measurement Request frame) sent by the Sensing initiator to the Sensing responder. The sensing measurement request frame carries a group of sensing measurement parameters used for negotiation. The Sensing responder responds to the Sensing initiator by replying with a sensing measurement response frame (Sensing Measurement Response frame). For example, if the Sensing responder agrees to the sensing measurement parameter carried in the sensing measurement request frame, the sensing responder sets a status code (Status Code) in the sensing measurement response frame to "agreed", and the sensing measurement session is established. If the Sensing responder rejects the sensing measurement parameter carried in the sensing measurement request frame, the sensing responder sets the status code in the sensing measurement response frame to "rejected", and the sensing measurement session fails to be established. If the Sensing responder rejects the sensing measurement parameter carried in the sensing measurement request frame, the sensing responder may alternatively set the status code in the sensing measurement response frame to "rejected with a provided suggestion", the sensing measurement response frame carries a corresponding recommended sensing measurement parameter, and the sensing measurement session fails to be established. The Sensing initiator and the Sensing responder may negotiate the sensing measurement parameter by continuously reusing the establishment procedure in the Sensing measurement session part until the sensing measurement session is established.

There are two types of sensing measurement exchange (Sensing measurement exchange) procedures: a trigger-based sensing measurement exchange (TB sensing measurement exchange) and a non-trigger-based sensing measurement exchange (Non-TB sensing measurement exchange). The TB sensing measurement exchange is a trigger-based (Trigger-based, TB) sensing measurement exchange type. In this type, one AP serves as a Sensing initiator to initiate a sensing measurement session, and one or more non-AP STAs serve as Sensing responders. This type is referred to as a "TB type". The Non-TB sensing measurement exchange is a non-trigger-based (Non-trigger-based, Non-TB) sensing measurement exchange type. In this type, one non-AP STA serves as a Sensing initiator to initiate a sensing measurement session, and one AP serves as a Sensing responder. This type may be referred to as a "Non-TB type".

A sensing by proxy (Sensing by Proxy, SBP) procedure allows a non-AP STA to request an AP to initiate WLAN Sensing on behalf of the non-AP STA. In the SBP procedure, a non-AP STA that initiates the SBP procedure is referred to as an SBP initiator, and an AP that responds to an SBP request of the SBP initiator is an SBP responder. The SBP initiator sends an SBP request frame (SBP Request frame) to the SBP responder to initiate establishment of the SBP procedure, and the SBP responder replies to the SBP initiator with an SBP response frame (SBP Response frame) to respond to the SBP procedure establishment request. Similar to the foregoing process of establishing a sensing measurement session in the Sensing measurement session part, the SBP procedure is also established through negotiation. Once an SBP measurement parameter is successfully negotiated, the SBP initiator serves as a Sensing initiator to initiate WLAN Sensing of the TB sensing measurement exchange type to meet an SBP requirement.

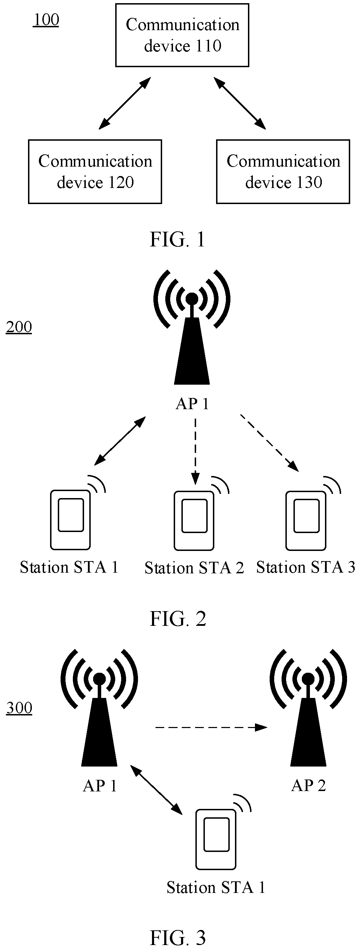

FIG. 1 is a diagram of a communication system to which a method according to an embodiment of this application is applicable. As shown in FIG. 1, a communication system 100 may include at least three communication devices, for example, a communication device 110, a communication device 120, and a communication device 130 shown in FIG. 1.

The communication devices in the communication system shown in FIG. 1 may communicate with each other. For example, the communication device 110 may communicate with the communication device 120 and the communication device 130. The communication device 110 may transmit data or control signaling to the communication device 120 or the communication device 130.

For example, the communication device 110 may be an AP, the communication device 120 may be an AP or may be a STA, and the communication device 130 may be an AP or may be a STA.

The following describes an application scenario of the communication method provided in embodiments of this application. It may be understood that the application scenario described in embodiments of this application is intended to describe the technical solutions in embodiments of this application more clearly, and does not constitute a limitation on the technical solutions provided in embodiments of this application.

FIG. 2 is a diagram of a scenario of a type of wireless sensing communication according to an embodiment of this application. As shown in FIG. 2, a wireless sensing communication system 200 includes at least one wireless access point AP, for example, an AP 1 shown in FIG. 2. The wireless sensing communication system 200 may further include at least one station STA, for example, a STA 1, a STA 2, and a STA 3 shown in FIG. 2. A solid line indicates that the AP establishes a sensing session with the STA 1 and performs sensing measurement, and a dashed line indicates that the STA 2 or the STA 3 obtains a sensing measurement result of the STA 1 from the AP.

FIG. 3 is a diagram of a scenario of another type of wireless sensing communication according to an embodiment of this application. As shown in FIG. 3, a wireless sensing communication system 300 includes at least one wireless access point AP, for example, an AP 1 and an AP 2 shown in FIG. 3. The wireless sensing communication system 300 may further include at least one station STA, for example, an STA 1 shown in FIG. 3. A solid line indicates that the AP 1 establishes a sensing session with the STA 1 and performs sensing measurement, and a dashed line indicates that the AP 2 obtains a sensing measurement result of the STA 1 from the AP 1.

When different devices initiate a same or similar sensing task, the following two methods may be used to obtain a sensing measurement result.

Method 1: An AP and a STA 1 have established a sensing measurement session with a measurement session identifier (Measurement Session ID) of 1. A STA 2, serving as an SBP initiator, initiates an SBP procedure request to the AP. To meet the SBP procedure request of the STA 2, the AP specifically establishes a sensing measurement session with a Measurement Session ID of 2. The two sensing measurement sessions perform sensing measurement exchanges in different periodic availability windows (Availability Window) to meet a sensing measurement requirement.

Different sensing measurement sessions have different Measurement Session IDs, and a quantity of Measurement Session IDs is limited in an infrastructure basic service set (Infrastructure Basic Service Set, Infrastructure BSS), that is, a quantity of sensing measurement sessions that can be maintained is limited.

Therefore, initiating a redundant sensing measurement session to complete a same or similar sensing task wastes sensing measurement session resources (such as Measurement Session ID resources).

In addition, different sensing measurement sessions further have different Availability Windows, and the windows periodically appear on a time axis. In a corresponding Availability Window, a Sensing initiator and a Sensing responder that belong to sensing measurement sessions with a same Measurement Session ID can send and receive only a frame related to the sensing measurement session, and cannot send and receive a frame of a data type. Therefore, each time the two Availability Windows appear, the AP and the STA 1 cannot exchange a data frame, which means that opportunities for data transmission between the AP and the STA 1 are reduced, causing a waste of bandwidth resources.

Method 2: An AP and a STA 1 have established a sensing measurement session with a Measurement Session ID of 1. A STA 2 has a sensing measurement requirement, but the sensing measurement requirement is the same as or similar to that of the sensing measurement session with the Measurement Session ID of 1. Therefore, a Non-TB-type sensing measurement session initiated by the STA 2 is redundant with the existing sensing measurement session (with the Measurement Session ID of 1). When the AP determines that the Non-TB-type sensing measurement session initiated by the STA 2 is redundant, to avoid occurrence of a redundant Non-TB sensing measurement session, the AP may reject a request that is initiated by the STA 2 and that is for establishing the Non-TB-type sensing measurement session, and request the STA 2 to participate in the existing sensing measurement session (with the Measurement Session ID of 1), to meet the sensing measurement requirement of the STA 2.

In this method, although no additional sensing measurement session needs to be added, two times of Request-Response negotiation interaction are required. In addition, because a role of the STA 2 in a TB-type sensing measurement session (with the Measurement Session ID of 1) is a Sensing responder, the STA 2 does not have a right to require a Sensing initiator (the AP) to send a sensing measurement report frame (Sensing Measurement Report frame), and therefore cannot obtain a sensing measurement result (for example, CSI). Therefore, in actual sensing measurement of the TB-type sensing measurement session, the STA 2 can only serve as a Sensing receiver to receive an NDP frame for sensing measurement, to obtain a sensing measurement result. However, in this case, the STA 2 can only obtain a unidirectional (that is, the NDP frame can be sent only from the AP to the STA 2) sensing measurement result, and cannot obtain a bidirectional sensing measurement result.

For the foregoing problem, this application proposes a new communication method. The method may be referred to as collaborative sharing (collaborative sharing, CoS) sensing.

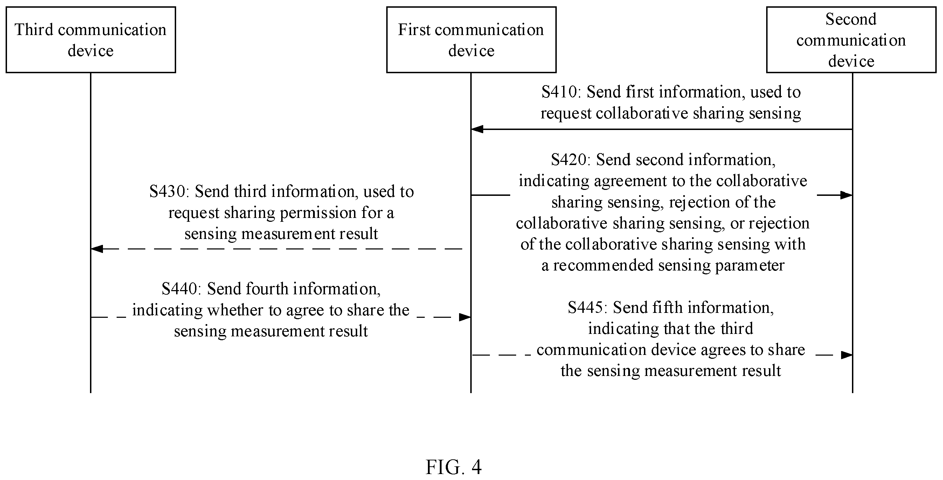

FIG. 4 is a schematic flowchart of a communication method according to an embodiment of this application. As shown in FIG. 4, the communication method may include S410 and S420.

S410: A second communication device sends first information to a first communication device, where the first information requests the first communication device to perform collaborative sharing sensing. Correspondingly, the first communication device receives the first information from the second communication device.

In this embodiment, the second communication device may be an AP or a STA. For example, the second communication device may be the STA 2 in FIG. 2, or may be the AP 2 in FIG. 3.

The second communication device may be referred to as an initiator of the collaborative sharing sensing.

In this embodiment, the first communication device may be an AP. For example, the first communication device may be the AP 1 in FIG. 2, or may be the AP 1 in FIG. 3. The first communication device may be referred to as a responder of the collaborative sharing sensing.

In this embodiment, the collaborative sharing sensing may be understood as sharing a sensing measurement result of one or more communication devices with another one or more communication devices.

For example, the first information may be carried in a frame. For ease of description, the frame carrying the first information is referred to as a first frame.

For example, the first frame includes an A field, and the A field carries the first information. It may be understood that the name of the A field is merely an example, and the name of the field is not limited in this embodiment.

For the case that the first frame includes the A field and the A field carries the first information, in some implementations, in addition to the A field, the first frame may further include at least one of the following fields: a category (Category) field, a public action (Public Action/Protected Dual of Public Action) field, a dialog token (Dialog Token) field, a sensing measurement parameters element (Sensing Measurement Parameters element) field, or an ISTA availability window element (ISTA Availability Window element) field. For meanings of the foregoing fields, refer to the conventional technology. Details are not described herein again.

In some implementations, the A field includes a plurality of fields, one of the plurality of fields carries the first information, and the field that carries the first information in the plurality of fields may be referred to as an A1 field. In addition to the A1 field, the plurality of fields may further include at least one of the following fields: an element ID (element ID) field, a length (Length) field, an element ID extension (element ID extension) field, a sensing responder addresses (sensing responder addresses) field, a sensing responder IDs (sensing responder IDs) field, or a sensing responder role bitmap (sensing responder role bitmap) field. For meanings of the foregoing fields, refer to the conventional technology. Details are not described herein again. It may be understood that the name of the A1 field is merely an example, and the name of the field is not limited in this embodiment.

In some implementations, the A1 field includes a plurality of fields, one of the plurality of fields carries the first information, and the field that carries the first information in the plurality of fields may be referred to as an A2 field. In addition to the A2 field, the plurality of fields may further include at least one of the following fields: a sensing by proxy request (SBP request) field, an SBP procedure expiry exponent (SBP procedure expiry exponent) field, a sensing responder (sensing responder) field, a number of sensing responders (number of sensing responder) field, a mandatory number of responders (mandatory number of responder) field, a preferred responder list (preferred responder list) field, a number of preferred responders (number of preferred responders) field, a mandatory preferred responder (mandatory preferred responders) field, an SR2SR sounding request (SR2SR sounding request) field, a preferred responder role bitmap present (preferred responder role bitmap present) field, or a reserved (Reserved) field. For meanings of the foregoing fields, refer to the conventional technology. Details are not described herein again. It may be understood that the name of the A2 field is merely an example, and the name of the field is not limited in this embodiment.

Optionally, the A1 field may be referred to as an SBP parameters control (SBP Parameters Control) field.

Optionally, the A field may be referred to as an SBP parameters element (SBP parameters element) field.

Optionally, the first frame may be referred to as an SBP request frame (SBP Request frame) or a CoS SBP request frame (CoS SBP Request frame).

Optionally, the A2 field may be referred to as a collaborative sharing SBP indication (CoS SBP Indication) field.

In some implementations, the CoS SBP Indication field may include 1 bit (bit).

In this implementation, an example of a definition of the CoS SBP Indication field is shown in Table 1. When a value of the CoS SBP Indication field is 0, it indicates that SBP is used; or when a value of the CoS SBP Indication field is 1, it indicates that CoS SBP is used. The SBP sensing may be understood as sensing by proxy used when collaborative sharing sensing is not performed. The SBP refers to existing SBP, or is referred to as Basic SBP, Baseline SBP, or the like.

**Table 1 Definition of the CoS SBP indication field**

| Value (value) | Definition (meaning) |
|---|---|
| 0 | SBP |
| 1 | CoS SBP |

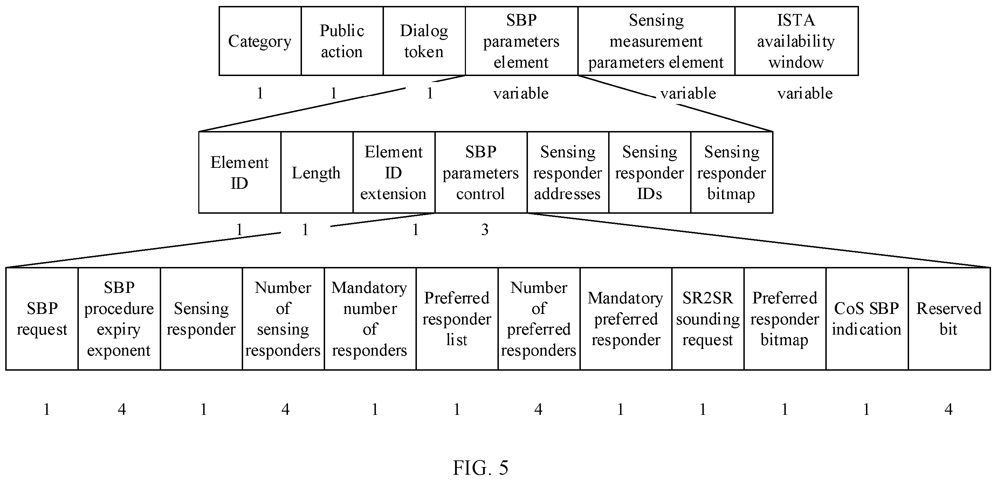

FIG. 5 is a diagram of a CoS SBP request frame in this implementation. The CoS SBP Indication field occupies 1 bit, a number below each field is an example of a quantity of bits occupied by the field, and "variable (variable)" indicates that the quantity of bits occupied by the field is variable.

In some implementations, the A2 field may include 2 bits (bit).

In this implementation, an example of a definition of the CoS SBP Indication field is shown in Table 2. When a value of the CoS SBP Indication field is 0, it indicates that SBP sensing is used; when a value of the CoS SBP Indication field is 1, it indicates that SBP sensing is directly initiated if CoS SBP sensing cannot success; when a value of the CoS SBP Indication field is 2, it indicates that CoS SBP is forcibly used; or when a value of the CoS SBP Indication field is 3, it indicates the meaning "reserved".

**Table 2 Definition of the CoS SBP indication field**

| Value (value) | Definition (meaning) |
|---|---|
| 0 | SBP |
| 1 | CoS SBP or SBP |
| 2 | CoS SBP |
| 3 | Reserved |

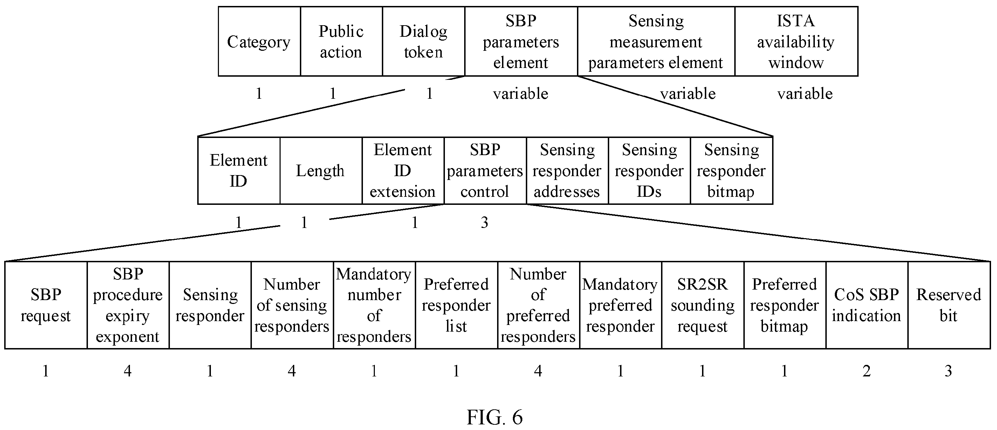

FIG. 6 is a diagram of a CoS SBP request frame in this implementation. The CoS SBP indication field occupies 2 bits, a number below each field is an example of a quantity of bits occupied by the field, and "variable (variable)" indicates that the quantity of bits occupied by the field is variable.

A difference between a frame structure shown in FIG. 6 and a frame structure shown in FIG. 5 includes the following: In the frame structure shown in FIG. 5, the A2 field includes a 1-bit CoS SBP indication field and a 4-bit reserved field; and in the frame structure shown in FIG. 6, the A2 field includes a 2-bit CoS SBP indication field and a 3-bit reserved field.

In some implementations, a structure of the CoS SBP request frame may be the same as that of an existing SBP request frame. In this implementation, a default sensing manner exists between the first communication device and the second communication device, and the default sensing manner may be SBP or CoS SBP. In this way, the second communication device sends a frame to the first communication device, where a structure of the frame is the same as the structure of the SBP request frame; and the first communication device and the second communication device establish a sensing channel in the default sensing manner.

For another example, the first frame includes a B field, and the B field carries the first information. It may be understood that the name of the B field is merely an example, and the name of the field is not limited in this embodiment.

For the case that the first frame includes the B field and the B field carries the first information, in some implementations, in addition to the B field, the first frame may further include at least one of the following fields: a category (Category) field, a public action field, a dialog token field, a sensing comeback info (sensing comeback info) field, and a measurement session ID indication (measurement session ID indication) field. For meanings of the foregoing fields, refer to the conventional technology. Details are not described herein again.

In some possible implementations, the B field includes a plurality of fields, one of the plurality of fields carries the first information, and the field that carries the first information in the plurality of fields may be referred to as a B1 field. In addition to the B1 field, the plurality of fields may further include at least one of the following fields: an element ID field, a length field, an element ID extension field, and a sensing measurement parameters (Sensing Measurement Parameters) field. For meanings of the foregoing fields, refer to the conventional technology. Details are not described herein again. It may be understood that the name of the B1 field is merely an example, and the name of the field is not limited in this embodiment.

In some implementations, the B1 field includes a plurality of fields, one of the plurality of fields carries the first information, and the field that carries the first information in the plurality of fields may be referred to as a B2 field. In addition to the B2 field, the plurality of fields may further include at least one of the following fields: a subelement ID (subelement ID) field, a length field, a min time between measurements (min time between measurements) field, and a reserved field. For meanings of the foregoing fields, refer to the conventional technology. Details are not described herein again. It may be understood that the name of the B2 field is merely an example, and the name of the field is not limited in this embodiment.

Optionally, the B1 field may be referred to as a sensing subelements (Sensing Subelements) field.

Optionally, the B field may be referred to as a sensing measurement parameters element (Sensing Measurement Parameters element) field.

Optionally, the first frame may be referred to as a sensing measurement request frame (Sensing Measurement Request frame) or a CoS sensing measurement request frame (CoS Sensing Measurement Request frame).

Optionally, the B2 field may also be referred to as a collaborative sensing indication (CoS Sensing Indication) field.

In some implementations, the CoS Sensing Indication field may include 1 bit (bit).

In this implementation, an example of a definition of the CoS Sensing Indication field is shown in Table 3. When a value of the CoS Sensing Indication field is 0, it indicates that Non-TB sensing (Non-TB Sensing) is used; or when a value of the CoS Sensing Indication field is 1, it indicates that CoS Non-TB sensing is used. The Non-TB sensing may be understood as Non-TB sensing used when collaborative sharing sensing is not performed. The Non-TB sensing refers to existing Non-TB sensing, or is referred to as Basic Non-TB Sensing or Baseline Non-TB Sensing.

**Table 3 Definition of the CoS Sensing indication field**

| Value (value) | Definition (meaning) |
|---|---|
| 0 | Non-TB sensing |
| 1 | CoS Non-TB sensing |

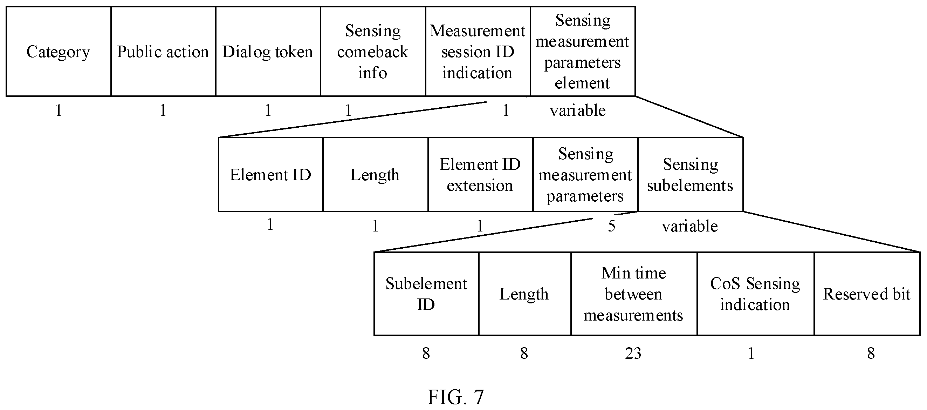

FIG. 7 is a diagram of a CoS sensing measurement request frame in this implementation. The CoS Sensing Indication field occupies 1 bit, a number below each field is an example of a quantity of bits occupied by the field, and "variable (variable)" indicates that the quantity of bits occupied by the field is variable.

In some implementations, the B2 field may alternatively include 2 bits (bit).

In this implementation, an example of a definition of the CoS Sensing Indication field is shown in Table 4. When a value of the CoS Sensing Indication field is 0, it indicates that Non-TB sensing (Non-TB Sensing) is used; when a value of the CoS Sensing Indication field is 1, it indicates that Non-TB sensing is directly initiated if CoS Non-TB Sensing cannot success; when a value of the CoS Sensing Indication field is 2, it indicates that CoS Non-TB Sensing is forcibly used; or when a value of the CoS Sensing Indication field is 3, it indicates the meaning "reserved". The Non-TB sensing may be understood as Non-TB sensing used when collaborative sharing sensing is not performed.

**Table 4 Definition of the CoS Sensing indication field**

| Value (value) | Definition (meaning) |
|---|---|
| 0 | Non-TB sensing |
| 1 | CoS Non-TB sensing or Non-TB sensing |
| 2 | CoS Non-TB sensing |
| 3 | Reserved |

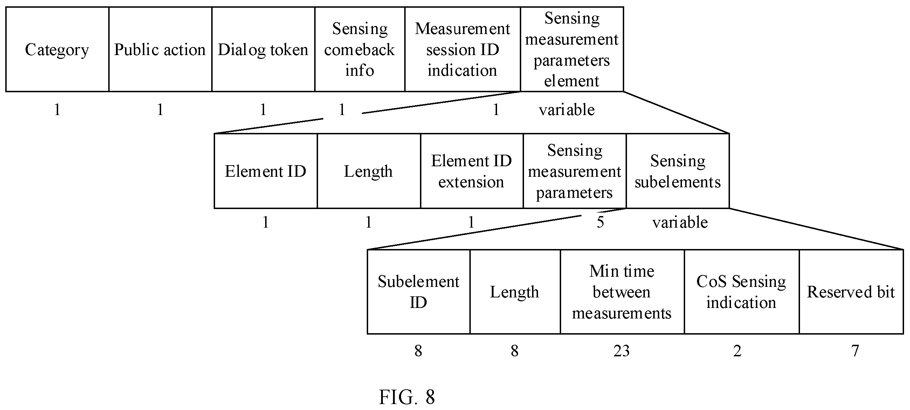

FIG. 8 is a diagram of a CoS sensing measurement request frame in this implementation. The CoS Sensing Indication field occupies 2 bits, a number below each field is an example of a quantity of bits occupied by the field, and "variable (variable)" indicates that the quantity of bits occupied by the field is variable.

A difference between a frame structure shown in FIG. 8 and a frame structure shown in FIG. 7 includes the following: In the frame structure shown in FIG. 7, the B2 field includes a 1-bit CoS Sensing indication field and an 8-bit reserved field; and in the frame structure shown in FIG. 8, the B2 field includes a 2-bit CoS Sensing indication field and a 7-bit reserved field.

In some implementations, a structure of the CoS sensing measurement request frame may be the same as that of an existing sensing measurement request frame. In this implementation, a default sensing manner exists between the first communication device and the second communication device, and the default sensing manner may be Non-TB Sensing or CoS Non-TB Sensing. In this way, the second communication device sends a frame to the first communication device, where a structure of the frame is the same as the structure of the sensing measurement request frame; and the first communication device and the second communication device establish a sensing channel in the default sensing manner.

S420: Send second information to the second communication device, where the second information indicates agreement to the collaborative sharing sensing, rejection of the collaborative sharing sensing, or rejection of the collaborative sharing sensing with a recommended sensing parameter. Correspondingly, the second communication device receives the second information from the first communication device.

For example, the second information may be carried in a frame. For ease of description, the frame carrying the second information is referred to as a sixth frame.

For example, the sixth frame includes a C field, and the C field carries the second information. It may be understood that the name of the C field is merely an example, and the name of the field is not limited in this embodiment.

For the case that the sixth frame includes the C field and the C field carries the second information, in some implementations, in addition to the C field, the sixth frame may further include at least one of the following fields: a category field, a public action field, a dialog token field, a measurement session ID indication (measurement session ID indication) field, a sensing initiator association identifier (Association Identifier, AID) or unassociated STA identifier (Unassociated STA Identifier, USID) field, which may be referred to as an (AID/USID) field, and an SBP parameters element (SBP parameters element) field. For meanings of the foregoing fields, refer to the conventional technology. Details are not described herein again.

For example, the C field may be a status code (Status Code) field. The status code field indicates a response result for a CoS SBP or CoS Non-TB Sensing request. If the CoS SBP or CoS Non-TB Sensing request is agreed, the status code field is set to "agreed" (SUCCESS). If the CoS SBP or CoS Non-TB Sensing request is rejected, the status code field is set to "rejected" (REQUEST_DECLINED). If the AP considers that sensing measurement sessions with a same sensing measurement parameter do not exist but similar sensing measurement sessions exist, the AP may set the status code to "rejected with a recommended parameter" (REJECTED_WITH_SUGGESTED_CHANGES).

Further, to indicate a finally established sensing measurement session mode to the second communication device, the first communication device further provides the following two frame structure design methods.

In some implementations, the C field includes a plurality of fields, one of the plurality of fields carries the second information, and the field that carries the second information in the plurality of fields may be referred to as a C1 field. In addition to the C1 field, the plurality of fields may further include at least one of the following fields: a measurement session ID (measurement session ID) field and a reserved field. For meanings of the foregoing fields, refer to the conventional technology. Details are not described herein again. It may be understood that the name of the C1 field is merely an example, and the name of the field is not limited in this embodiment.

Optionally, the C field may be referred to as a measurement session ID indication field.

Optionally, the sixth frame may be referred to as an SBP response frame (SBP Response frame) or a CoS SBP response frame (CoS SBP Response frame).

Optionally, the C1 field may be referred to as an SBP mode indication (SBP Mode Indication) field.

The SBP Mode Indication field may include 1 bit (bit).

In this implementation, an example of a definition of the SBP Mode Indication field is shown in Table 5. When a value of the SBP Mode Indication field is 0, it indicates that SBP is set up; or when a value of the SBP Mode Indication field is 1, it indicates that CoS SBP is set up.

**Table 5 Definition of the SBP Mode Indication field**

| Value (value) | Definition (meaning) |
|---|---|
| 0 | SBP |
| 1 | CoS SBP |

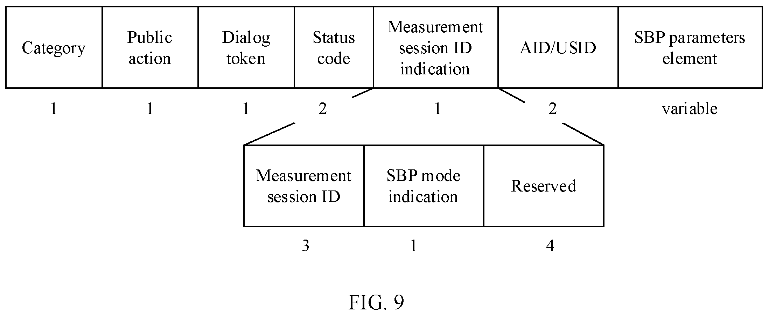

FIG. 9 is a diagram of a CoS SBP response frame in this implementation. The SBP Mode Indication field occupies 1 bit (bit), a number below each field is an example of a quantity of bits occupied by the field, and "variable (variable)" indicates that the quantity of bits occupied by the field is variable.

In some implementations, the C field includes two fields, one of the two fields carries the second information, the field that carries the second information in the two fields may be referred to as a C1 field, and the two fields may further include a reserved field in addition to the C1 field.

Optionally, the C field may be referred to as an SBP mode indication (SBP Mode Indication) field.

Optionally, the C1 field may be referred to as an SBP mode (SBP Mode) field.

The SBP mode field may include 1 bit (bit).

In this implementation, for a definition of the SBP Mode field, refer to the foregoing definition of the SBP Mode Indication field. Details are not described herein again.

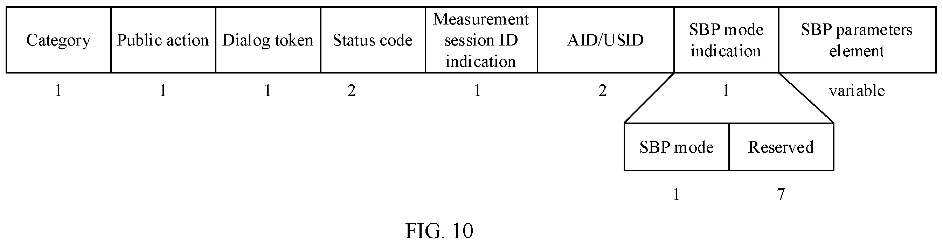

FIG. 10 is a diagram of a CoS SBP response frame in this implementation. The SBP Mode field occupies 1 bit (bit), a number below each field is an example of a quantity of bits occupied by the field, and "variable (variable)" indicates that the quantity of bits occupied by the field is variable.

A difference between a frame structure shown in FIG. 10 and a frame structure shown in FIG. 9 includes the following: In the frame structure shown in FIG. 9, a 1-bit SBP mode indication field is defined in a reserved bit in a measurement session ID indication field in an existing SBP Response frame structure; and in the frame structure shown in FIG. 10, a 1-bit SBP mode indication field is newly added to the existing SBP Response frame structure, and the SBP mode indication field includes a 1-bit SBP mode field and a 7-bit reserved field.

In the two implementations, when the second communication device sends a CoS SBP Request frame to the first communication device to request to establish a sensing measurement session, if the first communication device sends, to the second communication device by using a response frame, whether to agree to the request for establishing the sensing measurement session, the response frame is the CoS SBP Response frame. If the status code field in the frame is set to "agreed" (SUCCESS), the foregoing two implementations may be used to indicate a finally established sensing measurement session mode. If the status code field in the CoS SBP Response frame is set to "rejected with a recommended parameter" (REJECTED_WITH_SUGGESTED_CHANGES), in addition to using the CoS SBP indication field designed in step S410 to indicate a recommended mode, the foregoing two implementations may also be used to indicate the recommended mode.

In this embodiment, S430 and S440 may be further included.

S430: Send third information to a third communication device, where the third information requests sharing permission for a sensing measurement result. Correspondingly, the third communication device receives the third information from the first communication device.

In this embodiment, the third communication device may be an AP or a STA. For example, the third communication device is the STA 1 in FIG. 2 or may be the STA 1 in FIG. 3, and the third communication device may be referred to as a sensing responder.

For example, the third information may be carried in a frame. For ease of description, the frame carrying the third information is referred to as a second frame.

For example, the second frame includes a D field, and the D field carries the third information. It may be understood that the name of the D field is merely an example, and the name of the field is not limited in this embodiment.

For the case that the second frame includes the D field and the D field carries the third information, in some implementations, in addition to the D field, the second frame may further include at least one of the following fields: a category field, a public action field, a dialog token field, a sensing comeback info (sensing comeback info) field, and a measurement session ID indication field. For meanings of the foregoing fields, refer to the conventional technology. Details are not described herein again.

In some implementations, the D field includes a plurality of fields, one of the plurality of fields carries the third information, and the field that carries the third information in the plurality of fields may be referred to as a D1 field. In addition to the D1 field, the plurality of fields may further include at least one of the following fields: an element ID field, a length field, an element ID extension field, and a sensing measurement parameters (Sensing Measurement Parameters) field. For meanings of the foregoing fields, refer to the conventional technology. Details are not described herein again. It may be understood that the name of the D1 field is merely an example, and the name of the field is not limited in this embodiment.

In some implementations, the D1 field may include a plurality of fields. Two of the plurality of fields carry the third information, and the two fields may be respectively referred to as a D2 field and a D3 field. In addition to the D2 field and the D3 field, the plurality of fields may further include a length field and a reserved field. It may be understood that the names of the D2 field and the D3 field are merely examples, and the names of the fields are not limited in this embodiment.

Optionally, the D1 field may be referred to as a sensing subelements (Sensing Subelements) field.

Optionally, the D field may be referred to as a sensing measurement parameters element (Sensing Measurement Parameters element) field.

Optionally, the second frame may be referred to as a sensing measurement request frame (Sensing Measurement Request frame) or a CoS sensing measurement request frame (CoS Sensing Measurement Request frame).

Optionally, the D2 field may be referred to as a subelement ID (Subelement ID) field.

In some implementations, the Subelement ID field may include 8 bits (bit).

In this implementation, an example of a definition of the Subelement ID field is shown in Table 6. When a value of the Subelement ID field is 0, it indicates a Non-TB type; when a value of the Subelement ID field is 1, it indicates a TB type; when a value of the Subelement ID field is 2, it indicates an SBP type; or when a value of the Subelement ID field is 3, it indicates a CoS SBP type.

**Table 6 Definition of the Subelement ID**

| Subelement ID value (value) | Definition (meaning) |
|---|---|
| 0 | Non-TB sensing specific subelement |
| 1 | TB sensing specific subelement |
| 2 | SBP specific subelement |
| 3 | CoS SBP specific subelement |
| 4 to 255 | Reserved |

Optionally, the D3 field may be referred to as a CoS SBP initiator AID/USID field, and indicates identity information of a collaborative sharing sensing initiator. In some implementations, the D3 field may include 12 bits (bit).

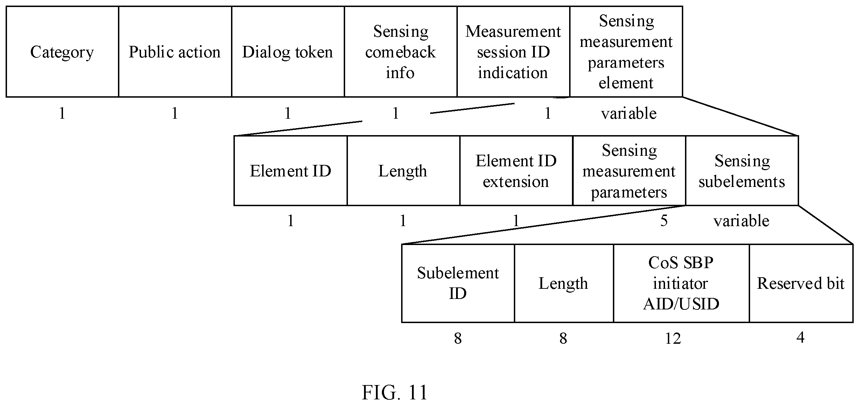

FIG. 11 is a diagram of a CoS sensing measurement request frame in this implementation. The Subelement ID field occupies 8 bits, and the CoS SBP initiator AID/USID field occupies 12 bits. A number below each field is an example of a quantity of bits occupied by the field, and "variable (variable)" indicates that the quantity of bits occupied by the field is variable.

In some implementations, the D1 field may include a plurality of fields, one of the plurality of fields carries the third information, and the field that carries the third information in the field may be referred to as a D4 field. In addition to the D4 field, the plurality of fields may further include at least one of the following fields: a subelement ID, a length field, an SBP initiator AID/USID field, and a reserved field. For meanings of the foregoing fields, refer to the conventional technology. Details are not described herein again. It may be understood that the name of the D4 field is merely an example, and the name of the field is not limited in this embodiment.

Optionally, the D4 field may be referred to as a CoS SBP Permission Indication field.

In some implementations, the D4 field may include 1 bit (bit).

In this implementation, an example of a definition of the CoS SBP Permission Indication field is shown in Table 7. When a value of the CoS SBP Permission Indication field is 0, it indicates that the second frame is an existing Sensing Measurement Request frame. When a value of the CoS SBP Permission Indication field is 1, it indicates that the second frame is a CoS Sensing Measurement Request frame, and an SBP Initiator AID/USID field carried in the sensing subelement is a CoS SBP Initiator AID/USID. The third communication device may perform, based on this, determining on the sharing permission for the sensing measurement result, and the determining may be understood as whether to share the sensing measurement result with the second communication device.

**Table 7 Definition of the CoS SBP Permission Indication field**

| Value (value) | Definition (meaning) |
|---|---|
| 0 | Sensing Measurement Request frame |
| 1 | CoS Sensing Measurement Request frame |

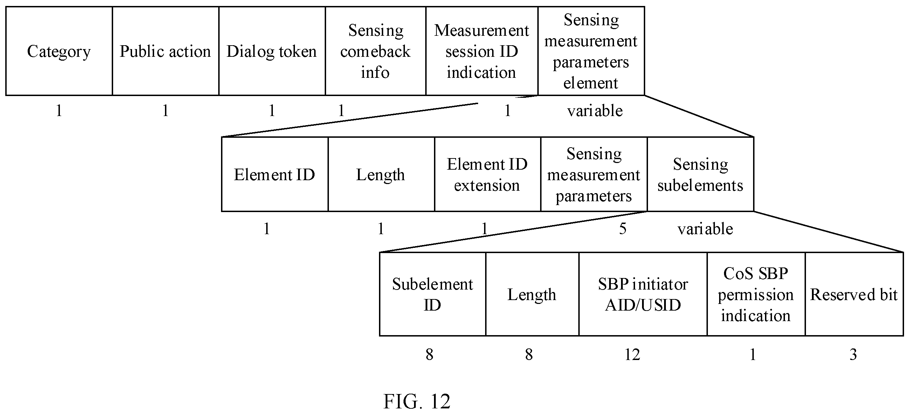

FIG. 12 is a diagram of a CoS sensing measurement request frame in this implementation. The CoS SBP Permission Indication field occupies 1 bit, a number below each field is an example of a quantity of bits occupied by the field, and "variable (variable)" indicates that the quantity of bits occupied by the field is variable.

S440: The third communication device sends fourth information to the first communication device, where the fourth information indicates whether to agree to share the sensing measurement result. Correspondingly, the first communication device receives the fourth information from the third communication device.

For example, the fourth information may be carried in a frame. For ease of description, the frame carrying the fourth information is referred to as a seventh frame.

For example, the seventh frame includes an E field, and the E field carries the fourth information. It may be understood that the name of the E field is merely an example, and the name of the field is not limited in this embodiment.

For the case that the seventh frame includes the E field and the E field carries the fourth information, in some implementations, in addition to the E field, the seventh frame may further include at least one of the following fields: a category field, a public action field, a dialog token field, a measurement session ID indication field, a status code field, and a decline duration indication (decline duration indication) field. For meanings of the foregoing fields, refer to the conventional technology. Details are not described herein again.

For example, the E field may be a status code (Status Code) field. The status code field indicates a response result for the request of the third information. When a value of the dialog token field in the seventh frame is the same as a value of the dialog token field in the second frame, it indicates that the seventh frame is used to respond to a sharing permission request corresponding to the second frame. If the third communication device agrees to the sharing permission request, the status code field is set to "agreed" (SUCCESS); or if the third communication device rejects the sharing permission request, the status code field is set to "rejected" (REQUEST_DECLINED).

When the status code in the seventh frame has only two states: "agreed" and "rejected", the sensing measurement parameters element (Sensing Measurement Parameters element) may not be carried in the frame.

Optionally, the seventh frame may be referred to as a CoS sensing measurement response frame.

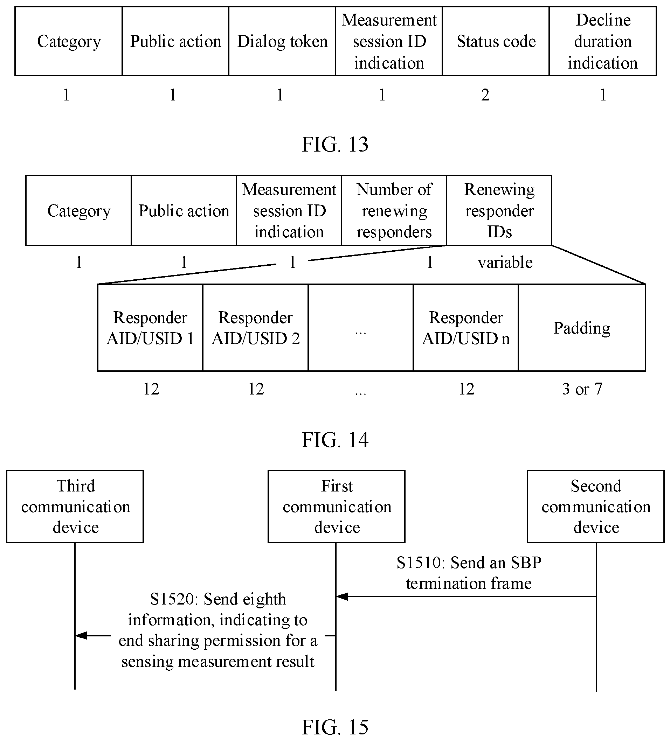

FIG. 13 is a diagram of a CoS sensing measurement response frame according to an embodiment of this application. A number below each field is an example of a quantity of bits occupied by the field, and "variable (variable)" indicates that the quantity of bits occupied by the field is variable.

In this embodiment, optionally, S445 may be further included.

S445: The first communication device sends fifth information to the second communication device, where the fifth information indicates that the third communication device agrees to share the sensing measurement result. Correspondingly, the second communication device receives the fifth information.

For example, the fifth information may be carried in a frame. For ease of description, the frame carrying the fifth information is referred to as a third frame.

For example, the third frame includes a first field, and the first field carries the fifth information. It may be understood that the name of the first field is merely an example, and the name of the field is not limited in this embodiment.

For the case that the third frame includes the first field and the first field carries the fifth information, in some implementations, in addition to the first field, the third frame may further include at least one of the following fields: a category field and a measurement session ID indication field. For meanings of the foregoing fields, refer to the conventional technology. Details are not described herein again.

In some implementations, the first field includes a plurality of fields, one of the plurality of fields carries the fifth information, and the fifth information indicates identity information of a communication device that can share the sensing measurement result.

Optionally, a field that carries the fifth information in the plurality of fields may be referred to as a responder AID/USID field.

Optionally, the first field may be referred to as a renewing responder IDs (Renewing Responder IDs) field.

In some implementations, the third frame includes a second field, the second field carries sixth information, and the sixth information indicates that the third frame carries indication information indicating that a communication device agrees to share the sensing measurement result. It may be understood that the name of the second field is merely an example, and the name of the field is not limited in this embodiment.

Optionally, the second field may be referred to as a public action field.

An example of a definition of the public action field is shown in Table 8.

**Table 8 Definition of the public action field**

| Value | Description |
|---|---|
| 51 | Sensing measurement request |
| ... | ... |
| 58 | SBP termination |
| 59 | SBP report |
| 60 | Collaborative sharing renewing frame |

In some implementations, the third frame includes a third field, the third field carries seventh information, and the seventh information indicates a quantity of communication devices that agree to share the sensing measurement result. It may be understood that the name of the third field is merely an example, and the name of the field is not limited in this embodiment.

Optionally, the third field may be referred to as a number of renewing responders (Number of Renewing Responders) field.

Optionally, the third frame may be referred to as a collaborative sharing renewing frame (CoS Renewing frame).

FIG. 14 is a diagram of a CoS Renewing frame according to an embodiment of this application. A number below each field is an example of a quantity of bits occupied by the field, and "variable (variable)" indicates that the quantity of bits occupied by the field is variable.

For example, in this embodiment, S410 to S440 may be collectively referred to as a step of setting up collaborative sharing sensing.

An embodiment further proposes a termination phase procedure of collaborative sharing sensing and a corresponding frame structure. FIG. 15 is a schematic flowchart of a communication method according to an embodiment of this application. As shown in FIG. 15, the communication method may include S1510 and S1520.

S1510: A second communication device sends an SBP termination frame (SBP Termination frame) to a first communication device. Correspondingly, the first communication device receives the SBP termination frame.

For example, the SBP termination frame indicates that collaborative sharing sensing between the first communication device and the second communication device is terminated.

In some possible implementations, the SBP termination frame may alternatively be sent by the first communication device to the second communication device.

It may be understood that, in this embodiment, the method in the embodiment shown in FIG. 15 may be performed after the embodiment shown in FIG. 4 is performed.

S1520: The first communication device sends eighth information to a third communication device, where the eighth information indicates to end sharing permission for a sensing measurement result. Correspondingly, the third communication device receives the eighth information.

For example, the eighth information may be carried in a frame. For ease of description, the frame carrying the eighth information is referred to as a fourth frame.

For example, the fourth frame includes an F field, and the F field carries the eighth information. It may be understood that the name of the F field is merely an example, and the name of the field is not limited in this embodiment.

For the case that the fourth frame includes the F field and the F field carries the eighth information, in some implementations, in addition to the F field, the fourth frame may further include at least one of the following fields: a category field, a public action field, and a measurement session ID indication field. For meanings of the foregoing fields, refer to the conventional technology. Details are not described herein again.

In some possible implementations, the F field includes a plurality of fields, two of the plurality of fields carry the eighth information, and the fields that carry the eighth information in the plurality of fields may be referred to as an F1 field and an F2 field. In addition to the F1 field and the F2 field, the plurality of fields may further include at least one of the following fields: a terminate all TB measurement sessions (terminate all TB measurement sessions) field, a terminate all non-TB measurement sessions (terminate all non-TB measurement sessions) field, a TB/non-TB measurement session type (TB/non-TB measurement session type) field. It may be understood that the names of the F1 field and the F2 field are merely examples, and the names of the fields are not limited in this embodiment.

Optionally, the F1 field may be referred to as a collaborative sharing permission indication (CoS Permission Indication) field.

Optionally, the F2 field may be a CoS initiator AID/USID field. In some implementations, the F2 field may include 12 bits (bit).

Optionally, the F field may be referred to as a measurement session termination control (Measurement Session Termination Control) field.

Optionally, the fourth frame may be referred to as a collaborative sharing sensing measurement termination frame (CoS Sensing Measurement Termination frame).

In some implementations, the F1 field may include 1 bit (bit).

An example of a definition of the CoS Permission Indication field is shown in Table 9. When a value of the CoS Permission Indication field is 0, it indicates that the fourth frame is used to terminate a sensing measurement session, and the CoS initiator AID/USID field is set to "reserved". When a value of the CoS Permission Indication field is 1, it indicates that the fourth frame is used to end sharing permission, and the CoS initiator AID/USID field carries identity information of a CoS initiator whose sharing permission is terminated.

**Table 9 Definition of the CoS Permission Indication field**

| Value | Definition |
|---|---|
| 0 | Terminate a sensing measurement session |
| 1 | End sensing sharing permission |

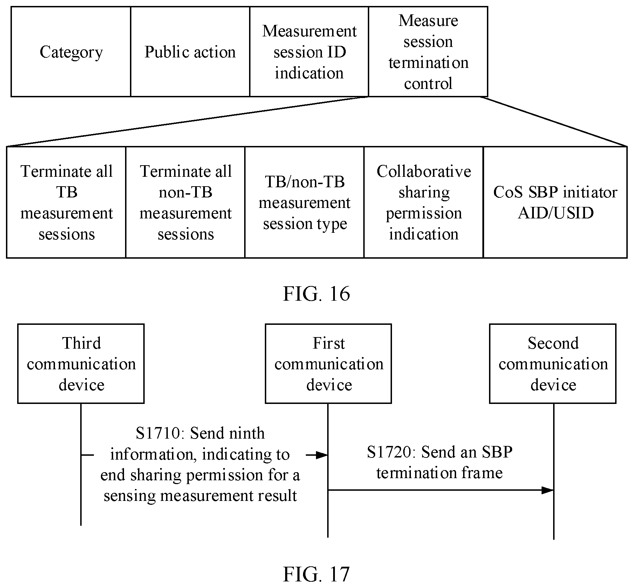

FIG. 16 is a diagram of a CoS sensing measurement termination frame according to an embodiment of this application. A number below each field is an example of a quantity of bits occupied by the field, and "variable (variable)" indicates that the quantity of bits occupied by the field is variable.

The following is another procedure of a termination phase of collaborative sharing sensing according to an embodiment. FIG. 17 is a schematic flowchart of a communication method according to another embodiment of this application. As shown in FIG. 17, the communication method may include S1710 and S1720.

S1710: A third communication device sends ninth information to a first communication device, where the ninth information indicates to end sharing permission for a sensing measurement result. Correspondingly, the first communication device receives the ninth information.

For example, the ninth information may be carried in a frame. For ease of description, the frame carrying the ninth information is referred to as a fifth frame.

For example, the fifth frame may alternatively be sent by the first communication device to the third communication device.

For example, the fifth frame includes a G field, and the G field carries the ninth information. It may be understood that the name of the field G is merely an example, and the name of the field is not limited in this embodiment.

For the case that the fifth frame includes the G field and the G field carries the ninth information, in some implementations, in addition to the G field, the fifth frame may further include at least one of the following fields: a category field, a public action field, and a measurement session ID indication field. For meanings of the foregoing fields, refer to the conventional technology. Details are not described herein again.

In some possible implementations, the G field includes a plurality of fields, two of the plurality of fields carry the ninth information, and the fields that carry the ninth information in the plurality of fields may be referred to as a G1 field and a G2 field. In addition to the G1 field and the G2 field, the plurality of fields may further include at least one of the following fields: a terminate all TB measurement sessions field, a terminate all non-TB measurement sessions field, and a TB/non-TB measurement session type field. It may be understood that the names of the G1 field and the G2 field are merely examples, and the names of the fields are not limited in this embodiment.

Optionally, the G1 field may be referred to as a collaborative sharing permission indication (CoS Permission Indication) field.

Optionally, the G2 field may be a CoS initiator AID/USID field. In some implementations, the G2 field may include 12 bits (bit).

Optionally, the G field may be referred to as a measurement session termination control (Measurement Session Termination Control) field.

Optionally, the fifth frame may be referred to as a collaborative sharing sensing measurement termination frame (CoS Sensing Measurement Termination frame).

In some implementations, the G1 field may include 1 bit (bit).

In some implementations, the G2 field may include 12 bits (bit).

An example of a definition of the CoS Permission Indication field is shown in Table 9. Details are not described herein again.

It may be understood that, for a frame structure of the fifth frame, refer to the frame structure of the fourth frame, as shown in FIG. 16. Details are not described herein again.

S1720: The first communication device sends an SBP termination frame to a second communication device. Correspondingly, the second communication device receives the SBP termination frame.

For this step, refer to S1510. Details are not described herein again.

A difference between the method in the embodiment shown in FIG. 17 and the method in the embodiment shown in FIG. 15 includes the following: In the method in the embodiment shown in FIG. 15, collaborative sharing sensing is first terminated; and in the method in the embodiment shown in FIG. 17, a sensing measurement session is first terminated or sharing permission is first ended.

It may be understood that, in this embodiment, the method in the embodiment shown in FIG. 15 or FIG. 17 may be performed after the embodiment shown in FIG. 4 is performed.

In the embodiment shown in FIG. 17, regardless of whether the sensing measurement session is first terminated or the sharing permission is first ended, for a collaborative sharing sensing initiator that has not ended the collaborative sharing sensing, no sensing measurement result is shared with the collaborative sharing sensing initiator. In an optional manner, the CoS initiator ends the CoS sensing, and re-initiates the CoS sensing by using a CoS setup procedure. However, this consumes a large amount of time and air interface frame interaction.

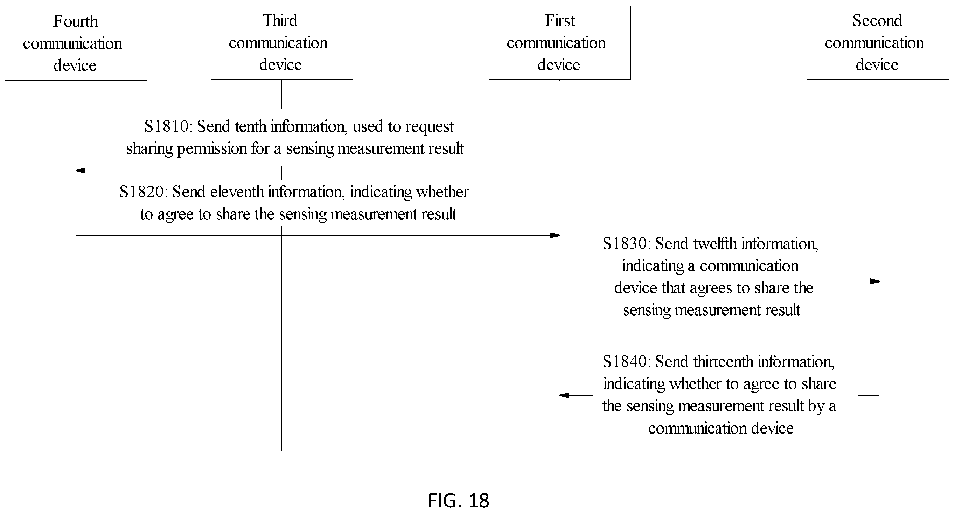

Therefore, for this problem, this application further proposes an enhanced procedure of a collaborative sharing sensing termination phase. FIG. 18 is a schematic flowchart of a communication method according to an embodiment of this application. As shown in FIG. 18, the method includes S1810 to S1840.

S1810: A first communication device sends tenth information to a fourth communication device, where the tenth information requests sharing permission for a sensing measurement result. Correspondingly, the fourth communication device receives the tenth information from the first communication device.

The fourth communication device may be an AP or a STA. For example, the fourth communication device may be the STA 1 in FIG. 2 or may be the STA 1 in FIG. 3, and the fourth communication device may be referred to as a sensing responder.

It may be understood that the fourth communication device is a STA that has established a sensing measurement session with a network device.

For this step, refer to S430. Details are not described herein again.

S1820: The fourth communication device sends eleventh information to the first communication device, where the eleventh information indicates whether to agree to share the sensing measurement result. Correspondingly, the first communication device receives the eleventh information from the fourth communication device.

For this step, refer to S440. Details are not described herein again.

S1830: The first communication device sends twelfth information to a second communication device, where the twelfth information indicates a communication device that agrees to share the sensing measurement result. Correspondingly, the second communication device receives the twelfth information from the first communication device.

For this step, refer to S445. Details are not described herein again.

In this embodiment, S1840 may be further included.

S1840: The second communication device sends thirteenth information to the first communication device, where the thirteenth information indicates whether to receive the sensing measurement result shared by the fourth communication device.

For example, when the second communication device receives the sensing measurement result shared by the fourth communication device, the thirteenth information is carried in a CTS-to-Self frame. A definition of the frame still uses that in the conventional technology, and details are not described herein again.

For another example, when the second communication device rejects the sensing measurement result shared by the fourth communication device, the thirteenth information is carried in an SBP Termination frame. A definition of the frame still uses that in the conventional technology, and details are not described herein again.

It may be understood that, in this embodiment, the method in the embodiment shown in FIG. 18 may be performed after the embodiment shown in FIG. 15 or FIG. 17 is performed.

In this embodiment, an enhanced design of the collaborative sharing sensing termination phase is provided, so that after a sensing measurement session is terminated or sharing permission is ended, a collaborative sharing responder can find a responder that can share a sensing measurement result and can replace a responder terminating a session or ending a sharing sensing, thereby avoiding a redundant operation of re-setting up collaborative sharing sensing after termination of the collaborative sharing sensing.

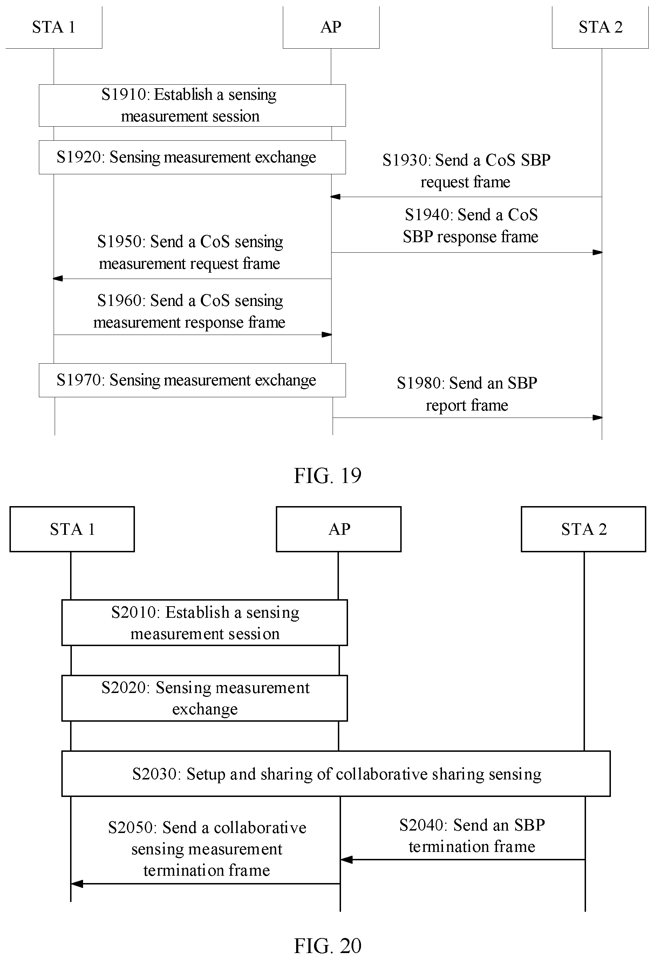

FIG. 19 is a schematic flowchart of a CoS SBP setup and sharing phase according to an embodiment of this application.

S1910: An AP establishes a sensing measurement session with a STA 1.

For example, the AP may be referred to as a Sensing initiator, and the STA 1 may be referred to as a Sensing responder.

In some possible implementations, the AP sends a sensing measurement request frame (Sensing Measurement Request frame) to the STA 1, where the sensing measurement request frame carries a group of sensing measurement parameters used for negotiation. The STA 1 responds by using a sensing measurement response frame (Sensing Measurement Response frame).

For example, the sensing measurement response frame may include a sensing measurement parameter field used by the STA 1 to determine whether to agree to establish a sensing measurement session.

For example, the sensing measurement response frame may include a status code field, and the status code field may include at least one of the following information: agreement to establishment of a sensing measurement session, rejection of establishment of a sensing measurement session, or rejection of establishment of a sensing measurement session with a recommended sensing parameter.

For example, if the STA 1 agrees to the sensing measurement parameter carried in the sensing measurement request frame, the STA 1 sets a status code (Status Code) in the sensing measurement response frame to "agreed", and the sensing measurement session is established. If the STA 1 rejects the sensing measurement parameter carried in the sensing measurement request frame, the STA 1 sets the status code in the sensing measurement response frame to "rejected", and the sensing measurement session fails to be established. If the STA 1 rejects the sensing measurement parameter carried in the sensing measurement request frame, the STA 1 may alternatively set the status code in the sensing measurement response frame to "rejected with a provided suggestion", the sensing measurement response frame carries a corresponding recommended sensing measurement parameter, and the sensing measurement session fails to be established.

The AP and the STA 1 may negotiate the sensing measurement parameter by continuously reusing the sensing measurement session establishment procedure until the sensing measurement session is established.

For example, the AP and the STA 1 establish a sensing measurement session with a measurement session identifier (Measurement Session ID) of 1.

S1920: The AP performs a sensing measurement exchange with the STA 1.

In some possible implementations, the AP performs the sensing measurement exchange with the STA 1 on the sensing measurement session with the measurement session identifier of 1. The sensing measurement exchange is used to obtain a sensing measurement result.

S1910 and S1920 are two steps of establishing a sensing measurement session and performing a sensing measurement exchange in this embodiment of this application.

S1930: A STA 2 sends a CoS SBP request frame to the AP. Correspondingly, the AP receives the CoS SBP request frame from the STA 2.

For this step, refer to content of the CoS SBP Request frame in S410. Details are not described herein again.

S1940: The AP sends a CoS SBP response frame to the STA 2. Correspondingly, the STA 2 receives the CoS SBP response frame from the AP.

For this step, refer to content of the CoS SBP Response frame in S420. Details are not described herein again.

S1950: The AP sends a CoS sensing measurement request frame to the STA 1. Correspondingly, the STA 1 receives the CoS sensing measurement request frame from the AP.

For this step, refer to content of the CoS sensing measurement request frame in S430. Details are not described herein again.

S1960: The STA 1 sends a CoS sensing measurement response frame to the AP. Correspondingly, the AP receives the CoS sensing measurement response frame from the STA 1.

For this step, refer to content of the CoS sensing measurement response frame in S440. Details are not described herein again.

In this embodiment, S1930 to S1960 may be referred to as a CoS SBP setup (CoS SBP setup exchange) phase.

In this embodiment, S1940 may alternatively be after S1950, or may alternatively be after S1960. To be specific, the AP first replies to the STA 2 with a CoS SBP Response frame, and then requests, from the STA 1, permission to share a sensing measurement result; or the AP may first request, from the STA 1, permission to share a sensing measurement result, and then reply to the SAT 2 with a CoS SBP Response frame; or the AP first requests, from the STA 1, permission to share a sensing measurement result, and then replies to the STA 2 with a CoS SBP Response frame after the STA 1 replies with whether the STA 1 agrees to the permission to share the sensing measurement result, provided that an interval between a CoS SBP Request frame and a CoS SBP Response frame does not exceed specified time (for example, 100 ms).

In this embodiment of this application, optionally, S1970 and S1980 may be further included.

S1970: The AP performs a sensing measurement exchange with the STA 1.

For this step, refer to S1920. Details are not described herein again.

S1980: The AP sends an SBP report frame (SBP Report frame) to the STA 2.

For example, the SBP report frame is used to share a sensing measurement result between the AP and the STA 1 with the STA 2.

For example, the SBP report frame may be referred to as a collaborative sharing SBP report frame (CoS SBP Report frame).

For example, the sensing measurement result is the sensing measurement result between the AP and the STA 1, or may be a sensing measurement result shared by the STA 1 with the STA 2.

For example, the collaborative sharing SBP report frame carries the sensing measurement result.

It should be noted that the collaborative sharing SBP report frame may still directly use an existing SBP report frame (SBP Report frame). Details are not described herein again.

For example, after collaborative sharing sensing is set up, the AP and the STA 1 complete one sensing measurement exchange, and the AP sends a collaborative sharing SBP report frame to the STA 2 after time of a short interframe space (short interframe space, SIFS).

For example, S1970 and S1980 may be collectively referred to as a CoS SBP sharing (CoS SBP sharing) phase.

It should be noted that, this application is not limited to sharing only a sensing result of the sensing measurement session, and is not limited to sharing only the sensing measurement result between the AP and the STA 1, and may be a sensing result of another sensing measurement session of the AP, and may be a sensing measurement result between the AP and another STA.

In this embodiment, while an SBP requirement of the STA 2 is met, establishment of a redundant sensing measurement session of the AP is also avoided, thereby releasing bandwidth resources and reducing sensing measurement session resources. In addition, there is only one availability window (Availability Window) maintained between the AP and the STA 1, which increases opportunities for data frame transmission between the AP and the STA 1, and releases bandwidth resources.

FIG. 20 is a schematic flowchart of a CoS SBP termination phase according to an embodiment of this application.

S2010: An AP establishes a sensing measurement session with a STA 1.

For this step, refer to S1910. Details are not described herein again.

S2020: The AP performs a sensing measurement exchange with the STA 1.

For this step, refer to S1920. Details are not described herein again.

S2030: A STA 2, the AP, and the STA 1 complete collaborative sharing sensing setup and sharing procedure.

This step may include S1930, S1940, S1950, and S1960. Details are not described herein again.

S2040: The STA 2 sends an SBP termination frame to the AP. Correspondingly, the AP receives the SBP termination frame.

For this step, refer to S1510. Details are not described herein again.

S2050: The AP sends a collaborative sharing sensing measurement termination frame to the STA 1. Correspondingly, the STA 1 receives the collaborative sharing sensing measurement termination frame.

For this embodiment, refer to content of the collaborative sharing sensing measurement termination frame in S1520. Details are not described herein.

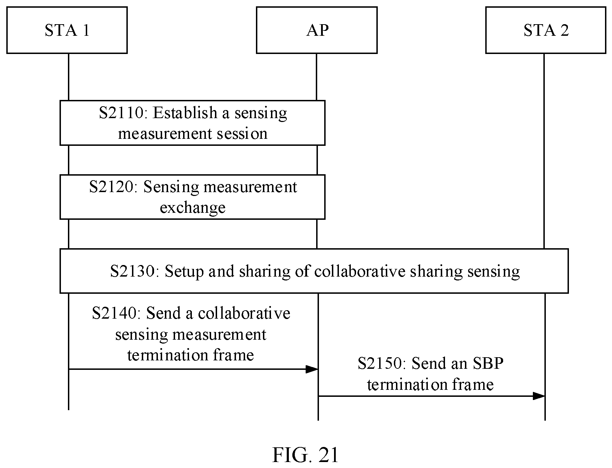

FIG. 21 is a schematic flowchart of a CoS SBP termination phase according to another embodiment of this application.

S2110: An AP establishes a sensing measurement session with a STA 1.

For this step, refer to S1910. Details are not described herein again.

S2120: The AP performs a sensing measurement exchange with the STA 1.

For this step, refer to S1920. Details are not described herein again.

S2130: A STA 2, the AP, and the STA 1 complete collaborative sharing sensing setup and sharing procedure.

This step may include S1930, S1940, S1950, and S1960. Details are not described herein again.

S2140: The STA 1 sends a collaborative sharing sensing measurement termination frame to the AP. Correspondingly, the AP receives the collaborative sharing sensing measurement termination frame.

For this step, refer to S1710. Details are not described herein again.

S2150: The AP sends an SBP termination frame to the STA 2. Correspondingly, the STA 2 receives the SBP termination frame.

For this step, refer to S1510. Details are not described herein again.

It may be understood that roles of a STA and an AP in collaborative sharing sensing in a case of SBP (CoS SBP) are respectively a CoS SBP initiator and a CoS SBP responder, and roles of a STA and an AP in collaborative sharing sensing in a case of Non-TB-type sensing measurement (CoS Non-TB Sensing) are respectively a CoS sensing initiator and a CoS sensing responder. Frames used in the two types of collaborative sharing sensing are different, but a CoS SBP termination phase procedure can also be used to terminate the CoS Non-TB Sensing.

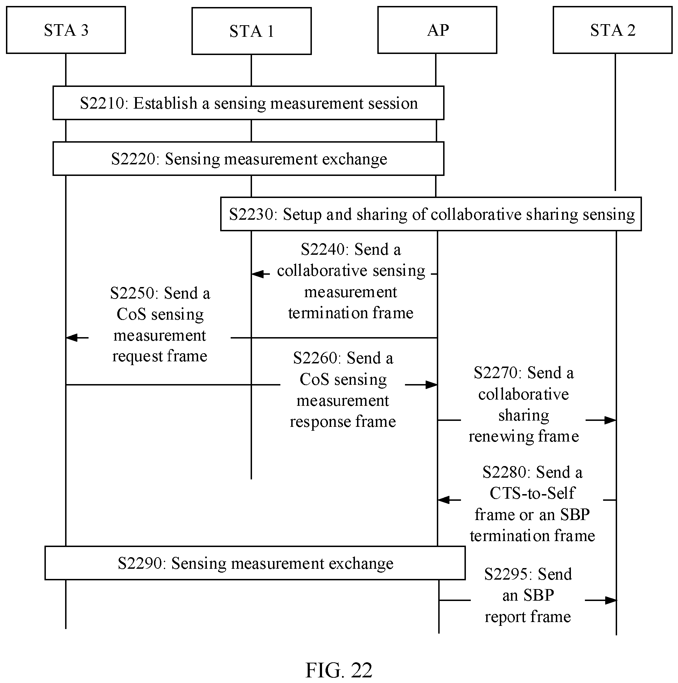

FIG. 22 is an enhanced flowchart of a CoS SBP termination phase according to an embodiment of this application.

S2210: An AP establishes a sensing measurement session with a STA 1 and a STA 3.

For example, the STA 1 and the STA 3 each may be referred to as a Sensing responder.

For this step, refer to S1910. Details are not described herein again.

S2220: The AP performs a sensing measurement exchange with the STA 1 and the STA 3.

For this step, refer to S1920. Details are not described herein again.

S2230: A STA 2, the AP, and the STA 1 complete collaborative sharing sensing setup and sharing procedure.

For this step, refer to S2130. Details are not described herein again.

S2240: The AP sends a collaborative sharing sensing measurement termination frame to the STA 1. Correspondingly, the STA 1 receives the collaborative sharing sensing measurement termination frame.

For this step, refer to S2050. Details are not described herein again.

S2250: The AP sends a CoS sensing measurement request frame to the STA 3. Correspondingly, the STA 3 receives the CoS sensing measurement request frame from the AP.

For this step, refer to S1950. Details are not described herein again.

S2260: The STA 3 sends a CoS sensing measurement response frame to the AP. Correspondingly, the AP receives the CoS sensing measurement response frame from the STA 3.

For this step, refer to S1960. Details are not described herein again.

S2270: The AP sends a collaborative sharing renewing frame to the STA 2. Correspondingly, the STA 2 receives the collaborative sharing renewing frame.

For this step, refer to content of the collaborative sharing renewing frame in S445. Details are not described herein again.

S2280: The STA 2 sends a CTS-to-Self frame or an SBP termination frame to the AP. Correspondingly, the AP receives the CTS-to-Self frame or the SBP termination frame.

For this step, refer to S1840. Details are not described herein again.

S2290: The AP performs a sensing measurement exchange with the STA 3.

For this step, refer to S2220. Details are not described herein again.

S2295: The AP sends an SBP report frame to the STA 2.

For example, the SBP report frame is used to share a sensing measurement result of the STA 3 with the STA 2.

For example, the sensing measurement result is a sensing measurement result between the AP and the STA 3, or may be a sensing measurement result shared by the STA 3 with the STA 2.

For this step, refer to S1980. Details are not described herein again.

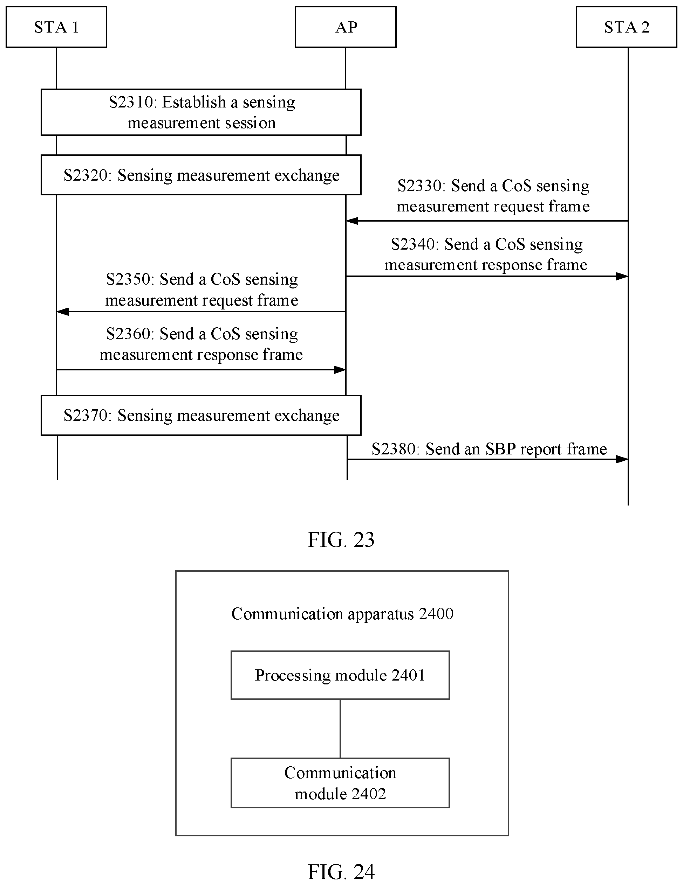

FIG. 23 is a schematic flowchart of a setup phase and sharing of CoS Non-TB Sensing according to an embodiment of this application.

S2310: An AP establishes a sensing measurement session with a STA 1.

For this step, refer to S2110. Details are not described herein again.

S2320: The AP performs a sensing measurement exchange with the STA 1.

For this step, refer to S2120. Details are not described herein again.

S2330: A STA 2 sends a CoS sensing measurement request frame to the AP. Correspondingly, the AP receives the CoS sensing measurement request frame.

For this step, refer to content of the CoS sensing measurement request frame in S410. Details are not described herein again.

S2340: The AP sends a CoS sensing measurement response frame to the STA 2. Correspondingly, the STA 2 receives the CoS sensing measurement response frame.

For this step, refer to content of the CoS sensing measurement response frame in S420. Details are not described herein again.

S2350: The AP sends a CoS sensing measurement request frame to the STA 1. Correspondingly, the STA 1 receives the CoS sensing measurement request frame from the AP.

For this step, refer to content of the CoS sensing measurement request frame in S430. Details are not described herein again.

S2360: The STA 1 sends a CoS sensing measurement response frame to the AP. Correspondingly, the AP receives the CoS sensing measurement response frame from the STA 1.

For this step, refer to content of the CoS sensing measurement response frame in S440. Details are not described herein again.

In this embodiment of this application, optionally, S2370 and S2380 may be further included.

S2370: The AP performs a sensing measurement exchange with the STA 1.

For this step, refer to S1970. Details are not described herein again.

S2380: The AP sends an SBP report frame to the STA 2.

For this step, refer to S1980. Details are not described herein again.

In this embodiment, a sensing measurement result of a same sensing measurement session may be directly shared with an initiator of a Non-TB-type sensing measurement session, which avoids occurrence of a redundant sensing measurement session while meeting a requirement of the Non-TB sensing initiator.

This embodiment and the embodiment shown in FIG. 19 have no difference in a procedure of performing steps, but the two embodiments have different application scenarios, and corresponding frame structures are changed.

FIG. 24 is a diagram of a structure of a communication apparatus according to an embodiment of this application. As shown in FIG. 24, an apparatus 2400 may include a processing module 2401 and a communication module 2402.

In a first example, the apparatus 2400 may be configured to implement the communication method implemented by the AP in any one of the embodiments shown in FIG. 4 to FIG. 23. For example, the processing module 2401 is configured to implement processing-related steps performed by the AP in any one of the embodiments shown in FIG. 4 to FIG. 23, and the communication module 2402 is configured to implement steps such as sending and/or receiving performed by the AP in any one of the embodiments shown in FIG. 4 to FIG. 23.

In a second example, the apparatus 2400 may be configured to implement the communication method implemented by the STA in any one of the embodiments shown in FIG. 4 to FIG. 23. For example, the processing module 2401 is configured to implement processing-related steps performed by the STA in any one of the embodiments shown in FIG. 4 to FIG. 23, and the communication module 2402 is configured to implement steps such as sending and/or receiving performed by the STA in any one of the embodiments shown in FIG. 4 to FIG. 23.

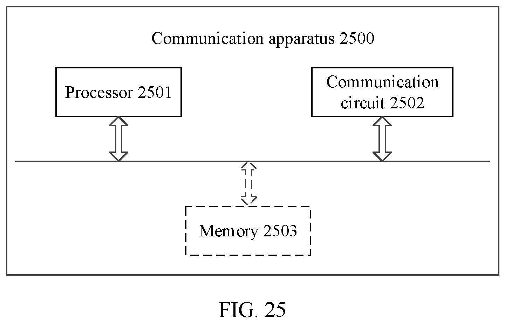

FIG. 25 is a diagram of a structure of a communication apparatus according to another embodiment of this application. As shown in FIG. 25, an apparatus 2500 includes a processor 2501 and a communication circuit 2502. The processor 2501 and the communication circuit 2502 are coupled to each other. It may be understood that the communication circuit 2502 may be a transceiver or an input/output interface. Optionally, the apparatus 2500 may further include a memory 2503, configured to store instructions executed by the processor 2501, or store input data required by the processor 2501 to run the instructions, or store data generated after the processor 2501 runs the instructions. It may be understood that the memory 2503 may be located outside the processor 2501, or may be located inside the processor 2501.

For example, the processor 2501 is configured to implement a function of the processing module 2401, and the communication circuit 2502 is configured to implement a function of the communication module 2402.

The apparatus 2500 may be a communication device, or may be a chip applied to the communication device. For example, the apparatus 2500 may be an AP or a chip applied to the AP, or may be a STA or a chip applied to the STA. It may be understood that when the apparatus 2500 is an AP or a STA, the communication circuit 2502 may be a transceiver.

Some embodiments of this application further provide a computer program product. When the computer program product runs on a processor, the method implemented by the AP in any one of the foregoing embodiments may be implemented, or the method implemented by the STA in any one of the foregoing method embodiments may be implemented.

Some embodiments of this application further provide a computer-readable storage medium. The computer-readable storage medium includes computer instructions. When the computer instructions are run on a processor, the method implemented by the AP in any one of the foregoing embodiments may be implemented, or the method implemented by the STA in any one of the foregoing method embodiments may be implemented.

Some embodiments of this application further provide a communication system. The system may implement the method implemented by the AP and the STA in any one of the foregoing embodiments.

It may be understood that the processor in embodiments of this application may be the following device or all or a part of circuits that is in the following device and that is used for a processing function: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any conventional processor.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to the processor, so that the processor can read information from the storage medium and can write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from one computer-readable storage medium to another computer-readable storage medium. For example, the computer programs or the instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The available medium may be a magnetic medium, for example, a floppy disk, a hard disk, or a magnetic tape; may be an optical medium, for example, a digital video disc; or may be a semiconductor medium, for example, a solid state drive.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that various numerical numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first communication device, wherein the method comprises:
receiving first information from a second communication device, wherein the first information requests the first communication device to perform collaborative sharing sensing; and
sending second information to the second communication device, wherein the second information indicates agreement to the collaborative sharing sensing, rejection of the collaborative sharing sensing, or rejection of the collaborative sharing sensing with a recommended sensing parameter.

2. The method according to claim 1, wherein the receiving the first information from the second communication device comprises:
receiving a first frame from the second communication device, wherein the first frame comprises an SBP parameters element field, the SBP parameters element field comprises an SBP parameters control field, and the SBP parameters control field carries the first information.

3. The method according to claim 1, wherein the receiving the first information from the second communication device comprises:
receiving a first frame from the second communication device, wherein the first frame comprises a sensing measurement parameters element field, the sensing measurement parameters element field comprises a sensing subelements field, and the sensing subelements field carries the first information.

4. The method according to any one of claims 1 to 3, wherein the method further comprises:
sending third information to a third communication device, wherein the third information requests sharing permission for a sensing measurement result; and
receiving fourth information from the third communication device, wherein the fourth information indicates whether to agree to share the sensing measurement result.

5. The method according to claim 4, wherein the sending the third information to the third communication device comprises:
sending a second frame to the third communication device, wherein the second frame comprises a sensing measurement parameters element field, the sensing measurement parameters element field comprises a sensing subelements field, and the sensing subelements field carries the third information.

6. The method according to any one of claims 4 and 5, wherein the fourth information indicates agreement to the sensing measurement result, and the method further comprises:
sending fifth information to the second communication device, wherein the fifth information indicates that the third communication device agrees to share the sensing measurement result.

7. The method according to claim 6, wherein the sending the fifth information to the second communication device comprises:
sending a third frame to the second communication device, wherein the third frame comprises a first field and a second field, the first field carries the fifth information, the second field carries sixth information, and the sixth information indicates that the third frame carries indication information indicating that a communication device agrees to share the sensing measurement result.

8. The method according to claim 7, wherein the third frame further comprises a third field, the third field carries seventh information, and the seventh information indicates a quantity of communication devices that agree to share the sensing measurement result.

9. The method according to any one of claims 1 to 8, wherein the method further comprises:
sending eighth information to the third communication device, wherein the eighth information indicates to end the sharing permission for the sensing measurement result.

10. The method according to claim 9, wherein the sending the eighth information to the third communication device comprises:
sending a fourth frame to the third communication device, wherein the fourth frame comprises a measurement session termination control field, and the measurement session termination control field carries the eighth information.

11. The method according to any one of claims 1 to 8, wherein the method further comprises:
receiving ninth information sent by the third communication device, wherein the ninth information indicates to end the sharing permission for the sensing measurement result.

12. The method according to claim 11, wherein the receiving the ninth information sent by the third communication device comprises:
receiving a fifth frame sent by the third communication device, wherein the fifth frame comprises a measurement session termination control field, and the measurement session termination control field carries the ninth information.

13. A communication method, applied to a second communication device, wherein the method comprises:
sending first information, wherein the first information requests a first communication device to perform collaborative sharing sensing; and
receiving second information from the first communication device, wherein the second information indicates agreement to the collaborative sharing sensing, rejection of the collaborative sharing sensing, or rejection of the collaborative sharing sensing with a recommended sensing parameter.

14. The method according to claim 13, wherein the sending the first information comprises:
sending a first frame, wherein the first frame comprises an SBP parameters element field, the SBP parameters element field comprises an SBP parameters control field, and the SBP parameters control field carries the first information.

15. The method according to claim 13, wherein the sending the first information comprises:
sending a first frame, wherein the first frame comprises a sensing measurement parameters element field, the sensing measurement parameters element field comprises a sensing subelements field, and the sensing subelements field carries the first information.

16. The method according to any one of claims 13 to 15, wherein the method further comprises:
receiving fifth information from the first communication device, wherein the fifth information indicates information about a third communication device that agrees to share a sensing measurement result.

17. The method according to claim 16, wherein the receiving the fifth information from the first communication device comprises:
receiving a third frame from the first communication device, wherein the third frame comprises a first field and a second field, the first field carries the fifth information, the second field carries sixth information, and the sixth information indicates that the third frame carries indication information indicating that a communication device agrees to share the sensing measurement result.

18. The method according to claim 17, wherein the third frame further comprises a third field, the third field carries seventh information, and the seventh information indicates a quantity of communication devices that agree to share the sensing measurement result.

19. A communication method, applied to a third communication device, wherein the method comprises:
receiving third information from a first communication device, wherein the third information requests sharing permission for a sensing measurement result; and
sending fourth information, wherein the fourth information indicates whether to agree to share the sensing measurement result.

20. The method according to claim 19, wherein the receiving the third information from the first communication device comprises:
receiving a second frame from the first communication device, wherein the second frame comprises a sensing measurement parameters element field, the sensing measurement parameters element field comprises a sensing subelements field, and the sensing subelements field carries the third information.

21. The method according to any one of claims 19 and 20, wherein the method further comprises:
receiving eighth information from the first communication device, wherein the eighth information indicates to end the sharing permission for the sensing measurement result.

22. The method according to claim 21, wherein the receiving the eighth information from the first communication device comprises:
receiving a fourth frame from the first communication device, wherein the fourth frame comprises a measurement session termination control field, and the measurement session termination control field carries the eighth information.

23. The method according to any one of claims 19 to 22, wherein the method further comprises:
sending ninth information, wherein the ninth information indicates to end the sharing permission for the sensing measurement result.

24. The method according to claim 23, wherein the sending the ninth information comprises:
sending a fifth frame, wherein the fifth frame comprises a measurement session termination control field, and the measurement session termination control field carries the ninth information.

25. A communication apparatus, comprising a functional module configured to implement the method according to any one of claims 1 to 24.

26. A communication apparatus, comprising a memory and a processor, wherein the memory is configured to store program instructions, and the processor is configured to execute the program instructions in the memory, to implement the method according to any one of claims 1 to 24.

27. A computer-readable storage medium, wherein the computer-readable storage medium stores program code used to be executed by a computer, and the program code comprises instructions used to implement the method according to any one of claims 1 to 24.

28. A computer program product, wherein the computer program product comprises instructions used to implement the communication method according to any one of claims 1 to 24.
